**Europäisches Patentamt**

**European Patent Office**

**Office européen des brevets**

(19)

(11) Veröffentlichungsnummer : **0 250 507**
**B1**

(12) **EUROPÄISCHE PATENTSCHRIFT**

(45) Veröffentlichungstag der Patentschrift :
**11.10.89**

(21) Anmeldenummer : **87900125.3**

(22) Anmeldetag : **13.12.86**

(86) Internationale Anmeldenummer :
**PCT/EP 86/00748**

(87) Internationale Veröffentlichungsnummer :
**WO/8703847 (02.07.87 Gazette 87/14)**

(51) Int. Cl.⁴ : **B 60 J   7/043**

(54) FAHRZEUGSCHIEBEDACH.

(30) Priorität : **19.12.85 DE 3544941**
**19.12.85 DE 3544940**

(43) Veröffentlichungstag der Anmeldung :
**07.01.88 Patentblatt 88/01**

(45) Bekanntmachung des Hinweises auf die Patenterteilung : **11.10.89 Patentblatt 89/41**

(84) Benannte Vertragsstaaten :
**AT BE CH DE FR GB IT LI LU NL SE**

(56) Entgegenhaltungen :
**EP–A– 0 134 042**
**DE–A– 2 512 426**
**DE–A– 3 404 541**
**GB–A–   884 344**
**GB–A– 2 164 006**

(73) Patentinhaber : **Farmont, Rolf, Dr.**
**Hortensienstrasse 17**
**D-4000 Düsseldorf 30 (DE)**

(72) Erfinder : **Farmont, Rolf, Dr.**
**Hortensienstrasse 17**
**D-4000 Düsseldorf 30 (DE)**

(74) Vertreter : **Schumacher, Horst, Dr. Dipl.-Phys.**
**Frühlingstrasse 43 (Ecke Holunderweg)**
**D-4300 Essen 1 (DE)**

## Beschreibung

Die Erfindung betrifft ein Fahrzeugschiebedach, zumindest bestehend aus einer Platte mit einer Vorderkante und einer Hinterkante, einer Öffnung im Fahrzeugdach, einer Führungsschiene, einer Vorderstütze, einer Hinterstütze, einem hinteren Höhenverstellorgan und einem Betätigungsorgan, wobei die Platte in ihrer vordersten Stellung die Öffnung im Fahrzeugdach verschließt, zumindest an ihrer Hinterkante mittels des hinteren Höhenverstellorganes höhenverstellbar ist, außerhalb der Dachöffnung in verschiedene Stellungen auf einer Seite des Fahrzeugdaches verschiebbar ist, nahe ihrer Vorderkante mittels der wenigstens einen Vorderstütze in Längsrichtung des Fahrzeuges entlang der Führungsschiene vor- und zurückbewegbar ist, mittels der wenigstens einen dahinter angeordneten Hinterstütze abgestützt ist, wobei die Hinterstütze das hintere Höhenverstellorgan aufweist und mittels des mindestens einen Betätigungsorganes verschiebbar und höhenverstellbar ist.

Ein derartiges Schiebedach, dessen verschließbare Platte sowohl unterhalb, insbesondere aber oberhalb des Fahrzeugdaches verschiebbar ist, ist aus der deutschen Offenlegungsschrift DE-A-34 04 541 bekannt. Bei diesem bekannten Fahrzeugschiebedach werden sowohl die Vorder- als auch die Hinterstütze der verschiebbaren Platte in Fahrzeuglängsrichtung verschoben, und zwar erfolgen diese beiden Verschiebungen unterschiedlich schnell, so daß die verschiebbare Platte stets gleichzeitig verschoben und hinten angehoben wird. Das plattenseitige hintere Halteorgan ist an der verschiebbaren Platte ortsfest angeordnet und weist eine zur Höhenverstellrichtung entgegengesetzt geneigte schiefe Ebene auf ; für ein Anheben der verschiebbaren Platte in Verschieberichtung ist die schiefe Ebene also in Verschieberichtung nach unten geneigt. Bei Verwendung eines derartigen Verstellorgans nimmt die Schrägstellung der verschiebbaren Platte mit zunehmendem Verschieben der Platte nach hinten ständig zu ; außerdem ist es relativ schwierig, die Höhenverstellung beim Herausbewegen der Platte aus der in der Fahrzeugdachebene liegenden Verschlußstellung schnell genug und in ausreichendem Umfang zu bewirken, damit die Platte kollisionsfrei verschiebbar ist. Diese Probleme könnten nur durch ein sehr aufwendiges Betätigungsorgan beseitigt werden, das außer der unterschiedlich schnellen Vor- und Zurückbewegung der Vorder- und der Hinterstütze eine sich längs des Verschiebeweges ändernde Verschiebegeschwindigkeit der Hinterstütze ermöglichen müßte.

Ferner ist aus der deutschen Offenlegungsschrift 31 24 325 ein weiteres Fahrzeugschiebedach bekannt, bei dem die Hinterstütze ortsfest montiert ist und das Höhenverstellorgan aus einem schwenkbaren Hebel besteht, der in Längsschlitzen einer plattenseitig montierten Schiene, in die ein Zapfen eingreift, verschiebbar ist. Auch wenn zwei Höhenverstellhebel verwendet werden, sind bei einem solchen Schiebedach Klappergeräusche in den verschiedenen Öffnungsstellungen unvermeidlich ; ebenso ist der Aufwand für eine ausreichend schnelle Anfangshöhenverstellung der Deckelplatte relativ groß.

Insbesondere bei oberhalb des Fahrzeugdaches verschiebbaren, als Spoiler-Version bekannten Platten ergibt sich das zusätzliche Problem, die erforderlichen Schließkräfte auf möglichst einfache Weise aufzubringen, besonders groß ist dies Problem bei sogenannten Nachrüst-Schiebedächern sowie anderen Schiebedächern, bei denen die verschiebbare Platte in der Verschlußstellung gegen eine, insbesondere umlaufende Dichtung angedrückt werden müssen.

Aus der DE-C-30 20 675 ist ein Schiebe-Hebe-Dach für Kraftfahrzeuge bekannt, dessen Deckelplatte entweder an seiner Hinterkante hochgestellt werden kann oder nach einer Absenkbewegung unter die feste Dachhaut des Kraftfahrzeuges nach hinten verschoben werden kann. Zu diesem Zweck ist unterhalb der Deckelplatte ein mit ihr an der vorderen Deckelkante schwenkbar verbundener Zwischenrahmen vorgesehen. Beim Schrägstellen der Deckelplatte nach oben, verbleibt der Zwischenrahmen in seiner bezüglich der Dachhaut dichtenden Ruhestellung, die er auch bei geschlossener Deckelplatte einnimmt. Beim Absenken der Dekkelplattenhinterkante unterhalb das Niveau der Dachhaut hingegen, wird der Zwischenrahmen gemeinsam mit der Deckelplatte abgesenkt und später auch gemeinsam mit ihr nach hinten unter die feste Dachhaut verschoben. Für diese Bewegungsabläufe ist ein einziges Antriebsorgan vorgesehen, welches mittels eines Bolzens in eine Kulissenführung des Zwischenrahmens eingreift. Diese Kulisse weist einen deckelplattenparallelen Führungsbereich und einen sich nach hinten daran anschließenden, nach schräg oben geneigten, weiteren Führungsbereich auf. Der deckelplattenparallele Führungsbereich ermöglicht ein ungehindertes Vor- und Zurückbewegen des angetriebenen Bolzens bei unveränderter Position des Zwischenrahmens. Da an dem angetriebenen Bolzen ein mit der Deckelplatte über eine deckelplattenseitige weitere Kulissenführung wirkverbundener Hebel angreift, bewirkt das Vor- und Zurückbewegen des angetriebenen Bolzens — solange er sich im deckelplattenparallelen Bereich der Führungskulisse des Zwischenrahmens befindet — ein Heben bzw. Senken der Hinterkante der Deckelplatte in verschiedene Positionen oberhalb der festen Dachhaut des Kraftfahrzeuges. Wenn der angetriebene Bolzen über das hintere Ende des deckelplattenparallelen Teiles der Führungskulisse des Zwischenrahmens nach hinten verschoben wird, senkt er dadurch einerseits den Zwischenrahmen in eine Position unterhalb seiner dichtenden Ruhe/Verschließ-Stellung und verriegelt dadurch andererseits die Deckelplatte mit dem Zwischenrahmen. Sobald der angetriebene Bolzen am hinteren Ende der Führungskulisse am Zwischenrahmen angelangt ist, bewirkt ein weiteres Bewegen des angetriebenen Bolzens nach hinten ein Verschieben der an ihrer Hinterkante nunmehr unter die Dachhaut abgesenkten Deckelplatte zusammen mit den Zwischenrahmen. Die Deckelplatte wird also sowohl hinsichtlich ihrer Vertikalbewegungen als auch hinsichtlich ihrer Horizontalbewegung ausschließlich von einem einzigen angetriebenen Bolzen betätigt, der ausschließlich an der Hinterstütze der Deckelplatte angreift.

Der Nachteil dieser bekannten Vorrichtung liegt vor allem in dem Erfordernis eines besonderen Zwischenrahmens; ein Verschieben der Deckelplatte nach hinten ist nur dann möglich, wenn die Deckelplatte unterhalb der festen Dachhaut des Kraftfahrzeuges geschoben wird — ein Verschieben der Deckelplatte nach hinten bei hinten oberhalb der festen Dachhaut angehobenen Deckelplatte ist hingegen nicht möglich.

Aus der GB-A-884 344 ist ein Schiebedach für Kraftfahrzeuge bekannt, bei dem das Absenken und Verschieben der Deckelplatte unterhalb die/der festen Dachhaut mittels einer in Fahrzeuglängsrichtung sich erstreckenden und über Kegelräder angetriebenen Spindel erfolgt. Diese Antriebsspindel ist in einem Rahmen des Schiebedaches ortsfest angeordnet und drehbar gelagert. Ein von der Antriebsspindel vor- und zurückbewegbarer Schuh trägt über ein Gelenk die Deckelplatte im Bereich ihrer Vorderkante. In der Schließstellung der Deckelplatte kann der angetriebene Schuh um einen bestimmten Betrag vor- und zurückbewegt werden, ohne daß sich dabei die Deckelplatte nach hinten verschiebt; in dieser Bewegungsphase wird lediglich eine sich in verschieberichtung der Deckelplatte erstreckende Schubstange bezüglich der Deckelplatte vor- oder zurückbewegt. Die Schubstange trägt an ihrem hinteren Ende einen bevorzugt als Rolle ausgebildeten Gleitschuh, der in dieser Bewegungsphase entlang einer ortsfesten Gleitebene des Deckelrahmens anheb- bzw. senkbar ist. Die Schubstange nimmt bei dieser Heb- bzw. Senkbewegung die Hinterkante der Deckelplatte mit. Sobald der Absenkvorgang beendet ist, liegt der Antriebsschuh an einem Gegenlager der Deckelplatte an; ein weiteres Verschieben des Antriebsschuhs nach hinten führt folglich zu einem Verschieben der Deckelplatte unterhalb der festen Dachhaut des Kraftfahrzeuges, wobei sich das Gleitelement am hinteren Ende der Schubstange mit nach hinten verschiebt, während die ortsfeste Gleitebene für die hintere Höhenverstellung der Deckelplatte ihre Ausgangsposition beibehält. Diese Anordnung hat den schwerwiegenden Nachteil, daß die Gleitelemente für die hintere Höhenverstellung der Deckelplatte nicht miteinander im Eingriff bleiben können, wenn die Deckelplatte nach hinten verschoben wird. Deshalb muß ein besonderer Führungsschuh die gewünschte Vertikalposition der Deckelplatte in den einzelnen Verschiebepositionen nach oben und nach unten absichern; außerdem mussen die Gleitelemente des Höhenverstellorgans am Ende des Nach-vorne-Schiebens der Deckelplatte miteinander in Eingriff gebracht werden. Darüber hinaus ist diese bekannte Vorrichtung nicht dazu geeignet, die Deckelplatte an ihrer Hinterkante über die feste Dachhaut hinweg nach oben anzuheben und sie in angehobener Stellung nach hinten oberhalb der festen Dachhaut des Kraftfahrzeuges zu verschieben.

Aus der DE-A-25 12 426 ist ein hinten hebbares Fahrzeugschiebedach bekannt, bei dem die Deckelplatte unmittelbar von Hand verschoben werden muß. Als Abstützung der Deckelplatte wird ein einziges leistenförmiges Element verwendet. Diese Unterschiede zu gattungsgemäßen Fahrzeugschiebedächern führen zu einer erheblichen Bedienungsunfreundlichkeit, welche viel Kraft und Konzentration der Bedienperson erfordern, insbesondere ist eine präzise Führung sowie ein vorteilhafter Bewegungsablauf der Platte nicht möglich; vor allem kann es zum Verkanten der Platte beim Verschieben kommen; schließlich ist ein erheblicher Kraftaufwand für das verschieben unvermeidbar, wobei zudem eine ergonomisch ungünstige Arbeitshaltung eingenommen werden muß.

Davon ausgehend liegt der Erfindung die Aufgabe zugrunde, unter möglichst weitgehender Meidung vorerwähnter Nachteile ein verbessertes gattungsgemäßes Fahrzeugschiebedach zu schaffen, insbesondere eines, bei dem mit einfachen Mitteln eine präzise Führung der Platte sowie ein vorteilhafter Bewegungsablauf der Platte ohne besondere Konzentrationsanforderung an die Bedienperson erreicht werden. Möglichst soll auch eine vorgebbare Veränderbarkeit des Plattenneigungswinkels, insbesondere während der Öffnungsund Schließbewegung, gewährleistet sein. Gewünscht ist ferner eine möglichst große Höhenverstellbarkeit des insbesondere hinteren Höhenverstellorgans sowie eine möglichst schnelle Höhenverstellbarkeit in bezug auf die Schiebebewegung zu Beginn der Öffnungsbewegung der Platte.

Diese Aufgabe wird mit den kennzeichnenden Merkmalen eines der Ansprüche 1, 2 oder 3 gelöst. Bei einer bevorzugten Ausführungsform der Erfindung ist die Führungsschiene eine das Betätigungsorgan bildende Antriebsspindel, insbesondere mit außenliegendem Schneckengewinde. Grundsätzlich kann das Verschieben der Platte aber auch mit einem Bowdenzug oder dgl. vorgenommen werden. Bevorzugt übernimmt aber die schwenkbare Führungsschiene eine Doppelfunktion, nämlich die Trag- und Führungsfunktion einerseits sowie die Antriebsfunktion andererseits. Höhenverstellorgane können in beiden Endbereichen der Führungsschiene, und zwar sowohl zwischen der Platte und der Führungsschiene als auch zwischen der Führungsschiene und dem Fahrzeugdach vorgesehen sein, so daß eine außerordentlich große Bewegungsvielfalt der Plattenbewegung möglich ist.

Ein erfindungsgemäßes Fahrzeugschiebedach hat unter anderem folgende Vorteile:

— Die verschiebbare Platte ist in allen Öffnungsstellungen exakt geführt und daher äußerst geräuscharm auch bei schnellem Fahren und bei Windböen ;

— es kann aus wenigen, sehr einfachen, insbesondere aus Kunststoff hergestellten Teilen gebaut sein und vergleichsweise schnell zusammenmontiert werden ;

— die für ein Andrücken der Platte in Verschlußstellung gegen Dichtungen erforderlichen Schließkräfte sind ohne zusätzliche oder komplizierte Bauteile gewährleistet.

Zweckmäßige Ausgestaltungen des Erfindungsgegenstandes, die insbesondere ein von der Verschiebebewegung der Dekkelplatte unabhängiges, schnelles, insbesondere hintereinanderfolgendes Höhenverstellen der Platte bewirken, eine ausreichend große Lüftungsstellung bei noch nicht im Öffnungssinne verschobener Platte auch bei besonders flachbauenden Schiebedächern, Betätigung der Platte durch ein einziges Betätigungsorgan sowie ein möglichst vorgebbares Schrägstehen der nach hinten geschobenen Platte gewährleisten, sind in weiteren Ansprüchen enthalten.

Die vorgenannten, erfindungsgemäß zu verwendenden Bauteile unterliegen in ihrer Größe, Formgestaltung, Materialauswahl und technischen Konzeptionen keinen besonderen Ausnahmebedingungen, so daß die in dem jeweiligen Anwendungsgebiet bekannten Auswahlkriterien uneingeschränkt Anwendung finden können.

Weitere Einzelheiten, Merkmale und Vorteile des Gegenstandes der Erfindung ergeben sich aus der nachfolgenden Beschreibung der zugehörigen Zeichnung, in der eine bevorzugte Ausführungsform eines erfindungsgemäßen Fahrzeugschiebedaches dargestellt ist. In der Zeichnung zeigen :

Fig. 1 ein Fahrzeugschiebedach in Aufsicht von oben ;

Fig. 2a dasselbe Fahrzeugschiebedach im Schnitt entlang der Linie II-II gemäß Fig. 1 in Schließstellung — ausschnittsweise ;

Fig. 2b dasselbe Fahrzeugschiebedach in einer ersten Hubstellung ;

Fig. 2c dasselbe Fahrzeugschiebedach in einer zweiten Hubstellung ;

Fig. 2d dasselbe Fahrzeugschiebedach in einer ersten Verschiebestellung ;

Fig. 2e dasselbe Fahrzeugschiebedach in einer zweiten Schiebestellung ;

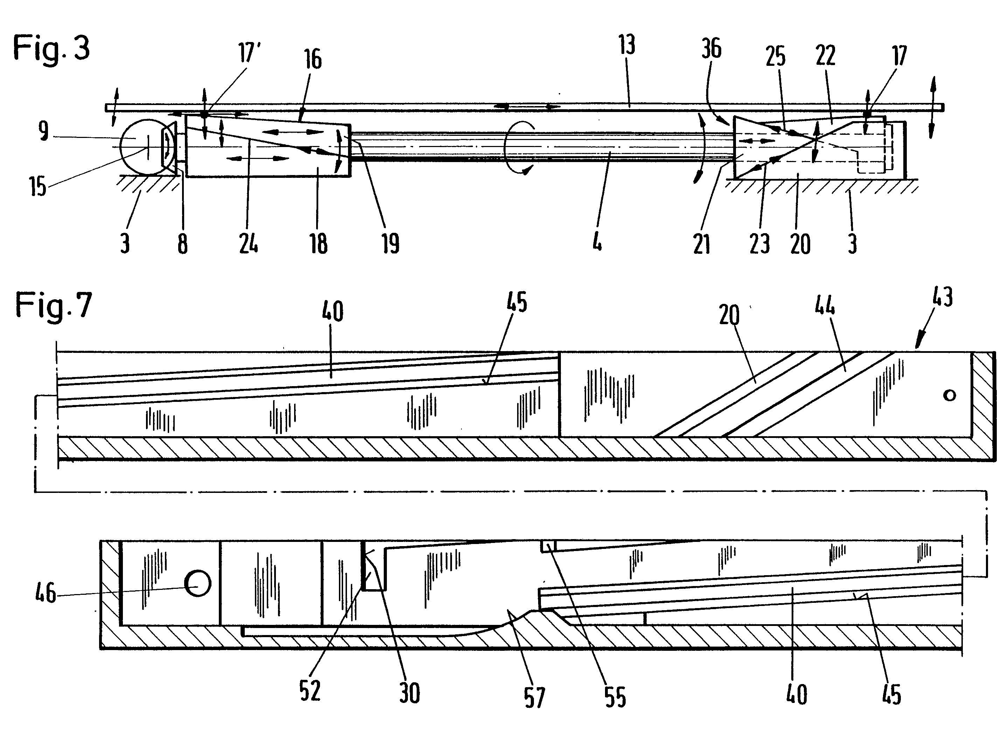

Fig. 3 von demselben Fahrzeugschiebedach eine Prinzipdarstellung entsprechend der Darstellung in Fig. 2a bis 2e ;

Fig. 4 eine weitere Ausführungsform eines Fahrzeugschiebedaches in Aufsicht von oben ausschnittsweise (vorderer und hinterer Endbereich der in Fahrtrichtung rechten Rahmenstrebe ;

Fig. 5 von demselben Fahrzeugschiebedach wie in Fig. 4 ein Vertikalschnitt entlang der Linie V — V gemäß Fig. 4 — und zwar bei völlig geschlossener Deckelplatte ;

Fig. 6 dasselbe Fahrzeugschiebedach wie in Fig. 4, wiederum im Schnitt entlang der Linie V —

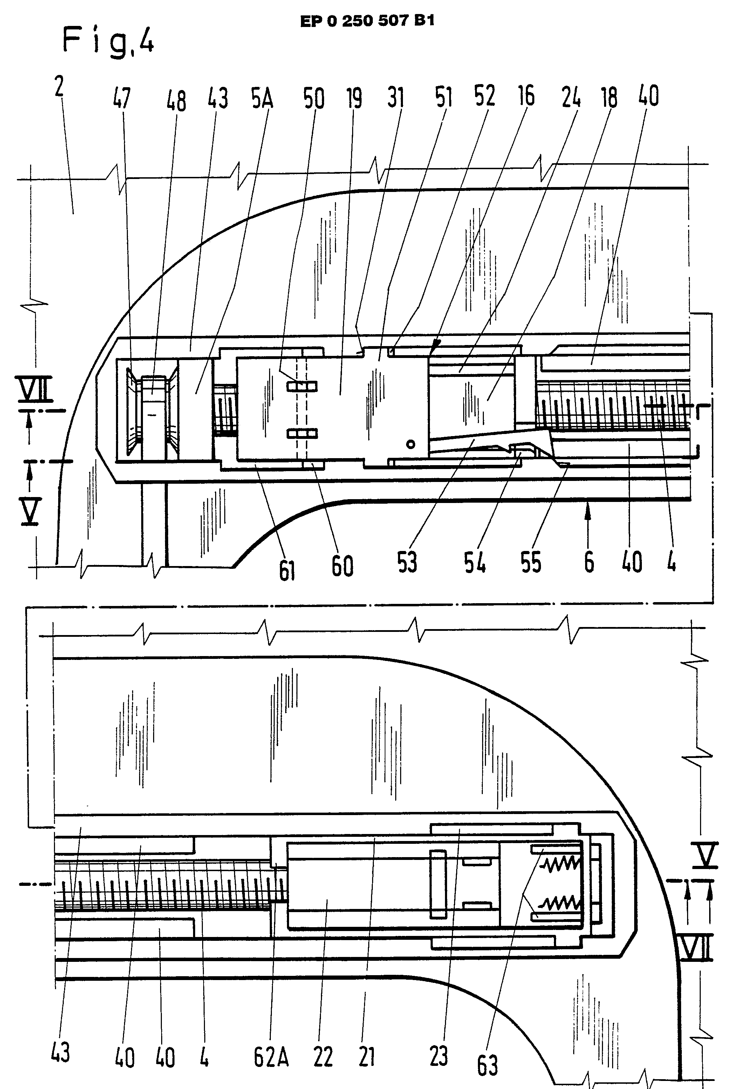

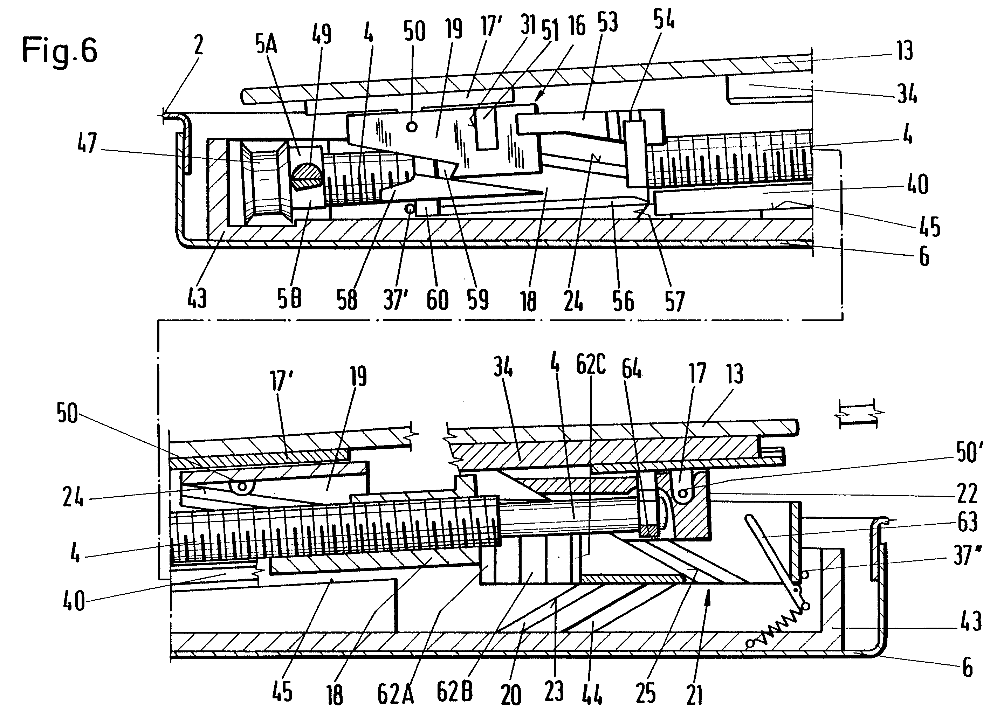

V aber bei hinten angehobener Deckelplatte in vorderster Stellung sowie in hinterster Stellung der Deckelplatte (die Darstellung in Fig. 6 entspricht unmittelbar der Darstellung in Fig. 4 soweit die Deckelplatte in vorderster, vorne und hinten angehobener Position sich befindet ;

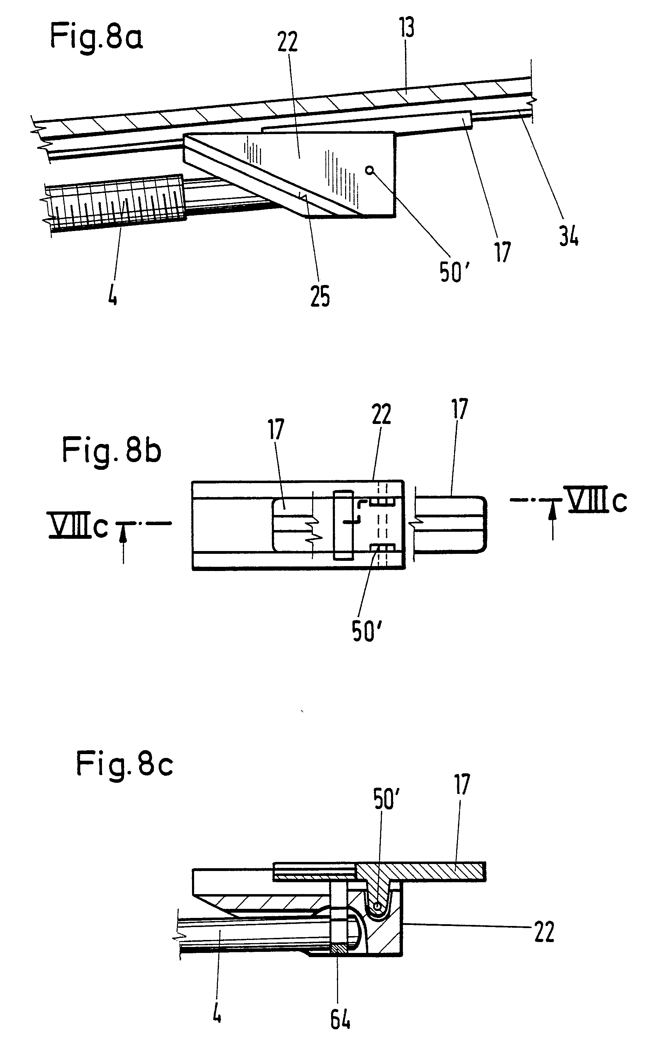

Fig. 7 von demselben Fahrzeugschiebedach wie in Fig. 4 bis 6 ein Führungselement im vertikalschnitt (Schnitt entlang der Linie VII — VII gemäß Fig. 4) ;

Fig. 8a bis 8c von demselben Fahrzeugschiebedach wie in Fig. 4 bis 7 eine Detaildarstellung im Bereich des hinteren Höhenverstellorganes, und zwar in Fig. 8a in Seitenansicht, in Fig. 8b in Ansicht von oben (teilweise aufgebrochen) und in Fig. 8c im vertikalschnitt entlang der Linie VIIIc — VIIIc gemäß Fig. 8b sowie.

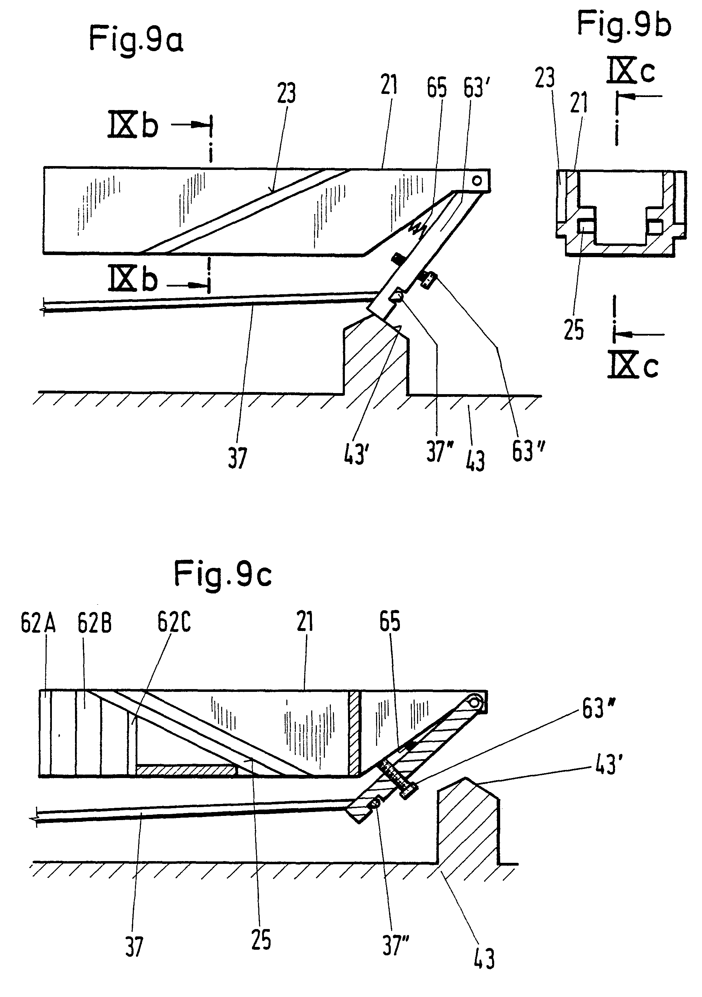

Fig. 9a bis 9c von dem hinteren Höhenverstellorgan eines Fahrzeugschiebedaches eine alternative Ausführungsform des verschiebbaren mittleren Gleitelementes in Seitenansicht (Fig. 9a), im Schnitt entlang der Linie IXb — IXb (Fig. 9b) sowie im Schnitt entlang der Linie IXc — IXc (Fig. 9c).

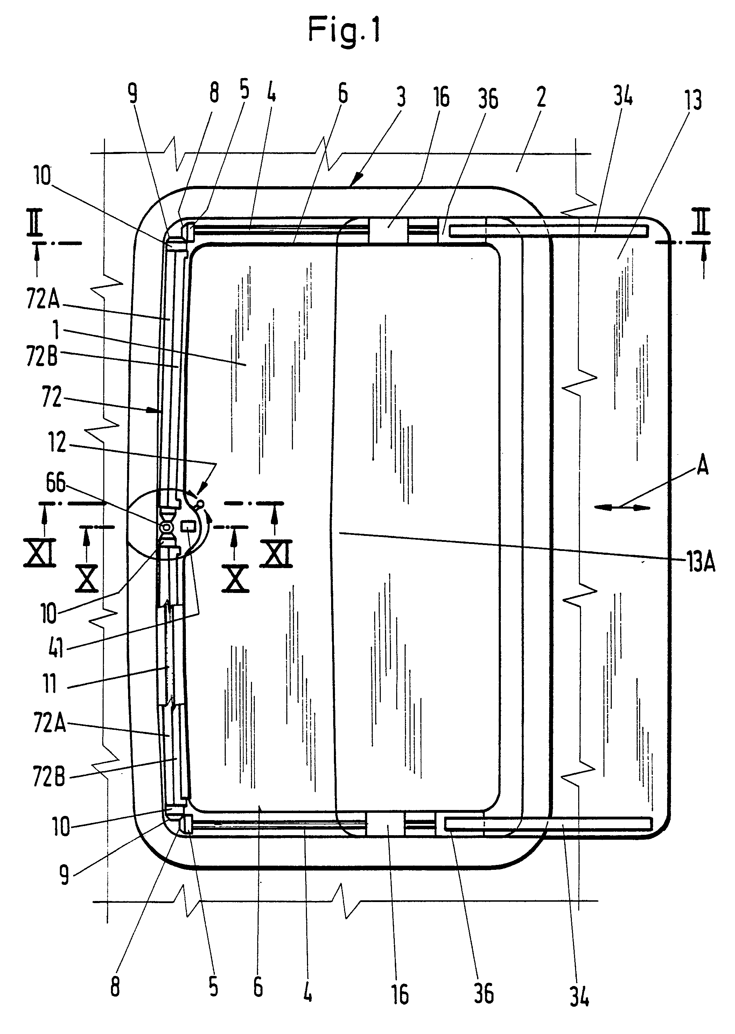

Bei einem Fahrzeugschiebedach gemäß Fig. 1 ist eine Dachöffnung 1 eines Fahrzeugdaches 2 z. B. mit einem Rahmen 3 aus Kunststoff und/oder Metall eingefaßt ; der Rahmen 3 ist Bestandteil eines nachrüstbaren Fahrzeugschiebedaches oder man verwendet einen bereits bei der Fahrzeugherstellung in das Fahrzeugdach integrierten Rahmen, der im Querschnitt, zumindest in Fahrzeuglängsrichtung bevorzugt ein L- oder U-förmiges, nach oben insbesondere offenes Profil zur möglichst vollständigen Aufnahme der zum Bewegen des Fahrzeugschiebedaches erforderlichen Bauteile aufweist. Innerhalb der in Fahrzeuglängsrichtung A weisenden Rahmenstreben 6 sind als Betätigungsorgane 4 einer in ihrer vordersten Stellung die Dachöffnung 1 verschließenden verschiebbaren Platte 13 bevorzugt je eine einstückige Antriebsspindel drehbar und axial nicht verschieblich gelagert. An der Vorderseite der Dachöffnung 1 weisen die Spindeln endseitige Kegelräder 8 auf, welche mit Kegelrädern 9 von im Rahmenvorderteil auf Lagerböcken 10 gelagerten Antriebswellen 11 kämmen. Die Antriebswellen 11 enden in der Rahmenmitte in einem an sich bekannten Kurbeltrieb 12.

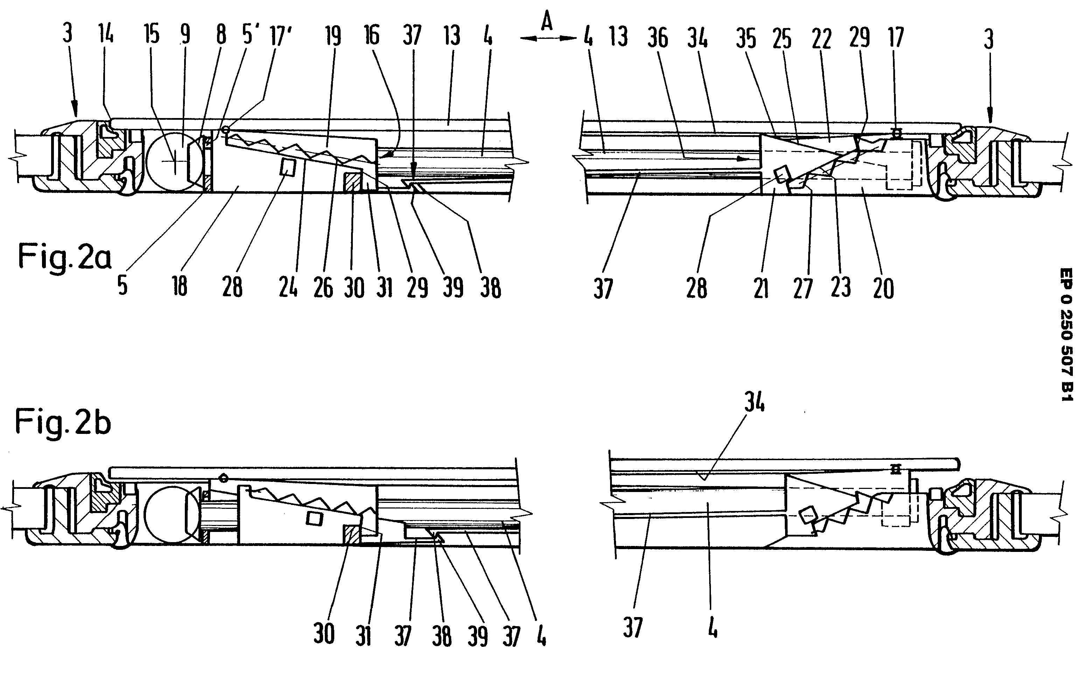

Wie aus den Figuren 2a bis 2e ersichtlich, weist die Platte 13 nahe ihrer Vorderkante 14 eine waagerechte Querachse 15 oder ein ähnliches Halteorgan auf, um das die von einer Vorderstütze 16 getragene Platte 13 schwenkbar ist. Die Hinterkante der Platte 13 ist mittels des Betätigungsorganes, das auch eine Führungsstrebe mit parallel laufendem Zug und/oder Druckelement oder ein Bowdenzug oder dergleichen sein kann, bevorzugt aber eine, insbesondere aus Kunststoff hergestellte Antriebsspindel mit Schneckengewinde ist, höhenverstellbar und weist hierzu bevorzugt ein unteres, ein mittleres und ein oberes Gleitelement 20 bis 22 auf, die gemeinsam das Höhenverstellorgan bilden ; grundsätzlich sind schon zwei Gleitelemente ausreichend. Das hintere Höhenverstellorgan kann die Funktion einer Hinterstütze 36 übernehmen. Plattenseitig ist ein hinteres Halteorgan 17, das bevorzugt mit einer weiteren Querachse für eine geringfügige Schwenkbewegung zwischen dem Höhenverstellorgan und der Platte 13 versehen ist, angeordnet. Ein ähnliches Halteorgan 17' kann im Bereich der Vorderstütze 16, bezüglich der Deckelplatte 13 insbesondere ortsfest, vorgesehen sein.

Auch die Vorderstütze 16 kann als Höhenverstellorgan ausgebildet sein und hierzu, ähnlich wie bei dem hinteren Höhenverstellorgan ein unteres und ein oberes Gleitelement, insbesondere zwei Gleitelemente 18 und 19 aufweisen.

Die Anlenkpunkte der Platte 13 an der Vorder- und Hinterstütze können sich unmittelbar oberhalb der Antriebsspindel befinden oder auch seitlich versetzt dazu bzw. seitlich versetzt zu einem anderen Betätigungsorgan angeordnet sein.

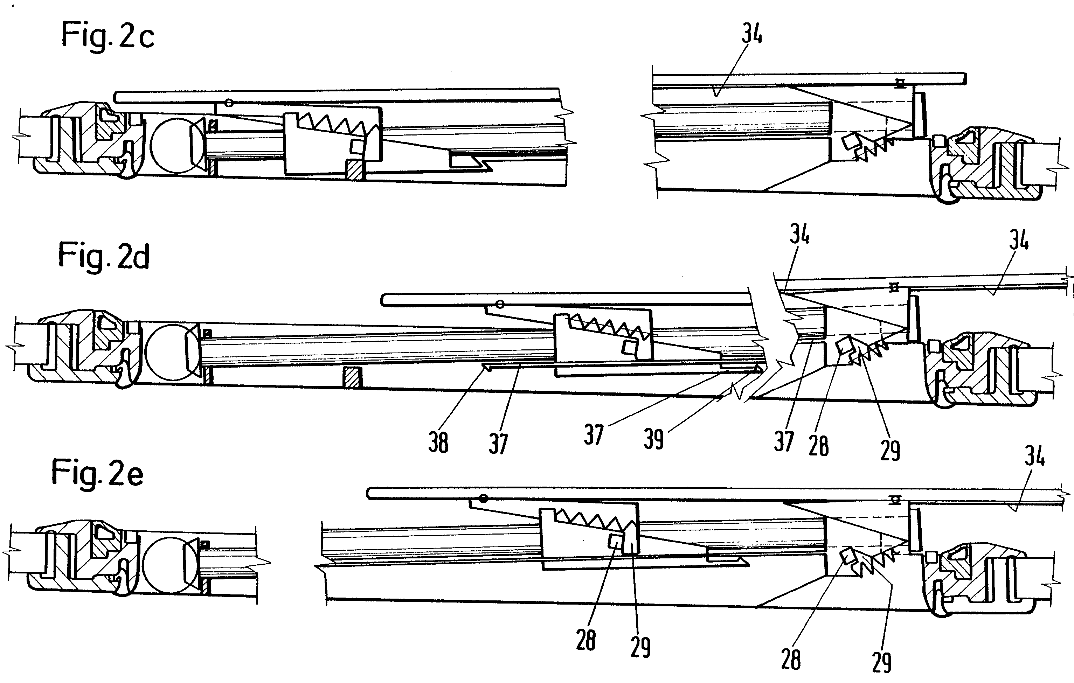

Die Vorderstütze 16 weist eine in der Zeichnung nicht näher dargestellte Gewindehülse innerhalb einer entsprechenden Durchbrechung auf, durch die beim Drehen der Spindel die Vorderstütze 16 in Fahrzeuglängsrichtung A bewegt wird. In der Zeichnung ist die Vorderstütze 16 als vorderes Höhenverstellorgan ausgebildet, um zu Beginn des Öffnungsweges der Platte 13 eine Druckentlastung von einer etwa zwischen dem Rahmen 3 und der Platte 13 vorgesehenen Dichtung zu bewirken. Die Höhenverstellung braucht daher nur einige Millimeter, z. B. 5 bis 10 mm zu betragen. Zu diesem Zweck besteht das Höhenverstellorgan (Stütze 16) aus einem unteren, von der Antriebsspindel unbehindert vor- und zurückschiebbaren unteren Gleitelement 18 und einem oberen, mit dem Halteorgan 17' der Deckelplatte 13 gelenkig und bezüglich der Platte 13 ortsfest mit ihr verbundenen Gleitelement 19. Die Gleitelemente 18 und 19 sind längs einer zwischen ihnen gebildeten schiefen Ebene 24 zueinander, z. B. durch Schwalbenschwanzverbindungen, gleitend geführt. Zwischen den Gleitelementen 18 und 19 wirkt eine Feder 26 im Sinne einer gegenseitigen Verschiebung der Gleitelemente 18 und 19 in Fahrzeuglängsrichtung A. In Fig. 2a ist diese Feder maximal gespannt und in Fig. 2c bis 2e bis auf eine Restspannung entlastet.

Das Entspannen der Feder 26 wird durch an den Gleitelementen vorgesehene korrespondierende Endanschläge 28 und 29 begrenzt; hierzu kann beim Gleitelement 18 ein es seitlich überragender Nocken und beim Gleitelement 19 ein das Gleitelement 18, nicht aber den Anschlag 28 überragender Stift dienen. Diese Anschläge 28 und 29 haben folgende Funktion: Wenn zum leichten Anheben, zwecks Dichtungsentlastung, die Platte 13 bei Beginn des Öffnungsweges vorne angehoben werden soll, wird durch Drehen der Antriebsspindel (Betätigungsorgan 4) über das Kegelrad 8 das bevorzugt von der Antriebsspindel selbst getragene Gleitelement 18 allmählich nach hinten verschoben — Fig. 2b zeigt eine Zwischenposition. Das Gefälle der schiefen Ebene 24 nach hinten unten ist gering, z. B. 10°. Die Feder 26 ist ausreichend stark und die gegenseitige Reibung der Gleitelemente 18 und 19 entsprechend gering. Durch das Nach-hinten-Schieben des Gleitelementes 18 kann es sich unter allmählicher Entlastung der Feder 26 bezüglich des Gleitelementes 19 nach hinten verschieben, während, bedingt durch die entsprechend große Kraft der Feder 26 das Gleitelement 19 und die Platte 13 in ihrer ursprünglichen Längsposition mittels eines Anschlages 31 des Gleitelementes 19 gegen einen rahmenseitigen Anschlag 30 gehalten werden. Erst wenn die Endanschläge 28 und 29 der Gleitelemente 18 und 19 zur gegenseiten Anlage kommen, bewirkt ein weiteres Nach-hinten-Verschieben des Gleitelementes 18 durch Drehen der Antriebsspindel ein Verschieben der Platte 13 nach hinten. Die Endanschläge 28 und 29 sind also derart angeordnet, daß sie das weitere Verschieben der Platte 13 gestatten und die Entspannung der Feder 26 begrenzen.

Das Gleitelement 18 erstreckt sich stets parallel zur Erstreckungsrichtung der Antriebsspindel 4 — ebenso das Gleitelement 19, das gegenüber dem Gleitelement 18 ebenfalls im wesentlichen spielfrei an der Ebene 24 geführt ist. Die weiter unten noch zu erläuternde Neigungsänderung zwischen der Antriebsspindel und der Platte während des Öffnens und Verschließens des Fahrzeugschiebedaches führt also zu einem geringfügigen Verschwenken des Höhenverstellorganes 16 gegnüber der Platte 13 um die vom Halteorgan 17' gebildete Querachse.

Beim Schieben des Gleitelementes 18 nach vorne durch entsprechend umgekehrtes Drehen der Antriebsspindel, etwa aus der Öffnungsposition gemäß Fig. 2e, wird das Gleitelement 19 und damit die Platte 13 von dem angetriebenen Gleitelement 18 mitgenommen, da die Feder 26 die Endanschläge 28 und 29 zwischen den beiden Gleitelementen 18 und 19 in Anlage hält. Sobald der Anschlag 31 des Gleitelementes 19 an dem korrespondierenden rahmenseitigen Anschlag 30 zur Anlage kommt (Fig. 2c) wird beim weiteren Verschieben des Gleitelementes 18 nach vorne ein weiteres Verschieben der Platte 13 verhindert und die Feder beginnt sich zu spannen, da nun die Gleitelemente 18 und 19 eine Relativbewegung ausführen und dabei ein Absenken der Platte 13 in ihrem vorderen Bereich bewirken. Sobald die Platte 13 mit einem rahmenseitigen Anschlag oder einer Dichtung vertikal zur Anlage kommt, wird sie bei weiterem Verschieben des Gleitelementes 18 nach vorne mit abstimmbar großer Kraft nach unten gespannt, so daß die gewünschte Schließkraft problemlos aufgebracht werden kann. Für ein derartiges Höhenverstellorgan wird also trotz Verwendung eines einzigen Antriebsorganes erreicht, daß zunächst die Höhenverstellung und erst danach die Längsverschiebung der Platte 13 bzw. die umgekehrte Bewegungsabfolge durch das Betätigungsorgan 4 bewirkt wird, wobei die Führung aller Bauelemente zueinander quasi spielfrei ist, so daß auch bei geöffnetem Fahrzeugschiebedach keine Klappergeräusche oder dgl. entstehen.

Das hintere, gleichzeitig die Funktion der Hinterstütze 36 der Platte 13 übernehmende Höhenverstellorgan ist in seinem Grundprinzip wie das vordere Höhenverstellorgan ausgebildet, d. h. es besteht zumindest aus einem antreibbaren Gleitelement 21 und mindestens einem weiteren Gleitelement 22 und/oder 20, wobei zwischen dem Gleitelement 21 einerseits und den Gleitelementen 20 und/oder 22 andererseits, bevorzugt wiederum eine Feder 27 im Sinne einer gegenseitigen Verschiebung der Gleitelemente in Fahrzeuglängsrichtung A wirkt.

Das hintere Höhenverstellorgan kann als Ganzes bezüglich der Platte 13 ortsfest angeordnet und bezüglich des Rahmens 3 des Fahrzeugdaches 2 in Fahrzeuglängsrichtung A gemeinsam mit der Platte 13 gleitbeweglich verschiebbar sein. Bei der in der Zeichnung dargestellten bevorzugten Ausführungsform wurde aber der umgekehrte Weg gewählt, d. h., daß das hintere Höhenverstellorgan bezüglich des Rahmens 3 — abgesehen von der gegenseitigen Verschiebung der Gleitelemente — insgesamt ortsfest angeordnet ist, während es bezüglich der Platte 13 über eine korrespondierende Führung 34, bzw. 35 an der Platte 13 einerseits und dem hinteren Höhenverstellorgan andererseits bezüglich der Platte 13 in Fahrzeuglängsrichtung gleitbeweglich, aber im übrigen im wesentlichen spielfrei geführt ist.

Das Gleitelement 20 des hinteren Höhenverstellorgans ist in der in der Zeichnung dargestellten bevorzugten Ausführungsform bezüglich des Fahrzeugdaches 2 ortsfest angeordnet. Es kann im einfachsten Fall aus einem mit dem korrespondierenden Gleitelement 21 im Eingriff stehenden Zapfen oder aus einem korrespondierenden Schlitz bestehen, in den ein Zapfen des Gleitelementes 21 eingreift und der dort in Fahrzeuglängsrichtung A gleitbeweglich, im übrigen aber im wesentlichen spielfrei geführt wird. Die von den Gleitelementen 20 und 21 so gebildete Gleitebene, die — wie auch die anderen schiefen Ebenen 24 und 25 — grundsätzlich auch einen gekrümmten Verlauf einnehmen kann, ist insgesamt als schiefe Ebene 23 ausgebildet, die bevorzugt in Richtung der Höhenverstellung und der Verschiebung der Platte 13 geneigt ist, im in Fig. 2 dargestellten Beispiel also nach hinten oben. Der maximale Winkel dieser schiefen Ebene zur Fahrzeugdachebene beträgt zwischen 5° und 45° bevorzugt 10° bis 30°.

Grundsätzlich ist es möglich, daß das Gleitelement 21 lediglich durch die Platte 13 unmittelbar im Verschiebesinne angetrieben wird ; hierzu können u. a. einfache Ein und Ausrastelemente dienen, die ein Weiterverschieben der Platte, zumindest in der höchsten von dem Höhenverstellorgan erreichten Höhenposition gewährleisten. Zu diesem Zweck ist das Gleitelement 21, z. B. über die Führungen 34 und 35 bezüglich der Platte 13 — zumindest indirekt — gleitbeweglich an dieser geführt bzw. umgekehrt.

Bevorzugt wird das Gleitelement 21 aber bei stillstehender Platte 13 eigenständig im Sinne einer Verschiebung in Fahrzeuglängsrichtung A angetrieben — nicht also durch die Platte 13 selbst. Auf diese Weise können die Höhenverstellung und die Verschiebung der Platte 13 nacheinander erfolgen, was ein wesentlich exakteres Führen und Verstellen der Platte 13 und angenehmere Lüftungseigenschaften des Fahrzeugschiebedaches zur Folge hat.

Insbesondere bei hinten anhebbar und oberhalb des Fahrzeugdaches nach hinten verschiebbaren Schiebedächern (Spoiler-Version), aber auch bei den mit der Erfindung ebenfalls realisierbaren Schiebedächern, die beim Öffnen unter das Fahrzeugdach geschoben werden, ist es nämlich erwünscht, die Platte 13 auch ohne eine Verschiebung nach hinten zunächst an der Hinterkante höhenverstellen zu können, insbesondere um durch eine Schrägstellung einen Entlüftungseffekt im Fahrgastraum zu erzielen. Zu diesem Zweck hat sich ein Anheben der hinteren Plattenkante um z. B. 2 cm oder mehr als sinnvoll erwiesen. Verwendet man als Höhenverstellorgan zwei, eine schiefe Ebene miteinander bildende Gleitelemente, so kann der durch den tiefsten und höchsten Punkt der schiefen Ebene vorgegebene Höhenunterschied aber nur z. T., bevorzugt zur Hälfte, maximal zu zwei Dritteln genutzt werden, wenn die gegenseitige Führung der Gleitelemente erhalten bleiben soll. Für einen Höhenverstellweg von 2 cm wäre also ein Höhenunterschied an der schiefen Ebene von etwa 4 cm erforderlich — entsprechend dick wäre das Fahrzeugschiebedach. Zur Erhaltung der Kopffreiheit im Fahrgastraum werden aber flach bauende Fahrzeugschiebedächer gewünscht. Um die konkurrierenden Forderungen nach einer ausreichenden Höhenverstellung und an eine möglichst flache Bauart des Fahrzeugschiebedaches bei Verwendung von Gleitelementen als Höhenverstellorgan beide zu erfüllen, werden bevorzugt mehr als zwei Gleitelemente, insbesondere drei Gleitelemente als Höhenverstellorgan verwendet. Entsprechend ist in Fig. 2a bis 2e ein Gleitelement 22 dargestellt, das mit dem Gleitelement 21 eine weitere schiefe Ebene 25 bildet. Entlang dieser Gleitebene können die Gleitelemente 21 und 22 unter gleichzeitiger Höhenverstellung der Platte 13, geführt durch Schwalbenschwanznuten, Schlitze und Zapfen oder dgl., gegenseitig verschoben werden.

Bevorzugt ist das Gleitelement 22 über das plattenseitige Halteorgan 17 und die Führung 35 bezüglich der plattenseitigen Führung 34 zur Platte 13 längsverschieblich geführt und nimmt außerdem in einer in Fahrzeuglängsrichtung A sich erstreckenden Ausnehmung das hintere Ende der Antriebsspindel (Betätigungsorgan 4) drehbeweglich auf, wobei weder die Antriebsspindel noch das Gleitelement 22 im gegenseitigen Berührungsbereich Vorschubzähne aufweisen, so daß sich die Antriebsspindel also frei in dem Gleitelement 22 drehen kann und dabei das Gleitelement 22 stets in der festgelegten Endposition der Antriebsspindel gehalten bleibt. Folglich wird die Antriebsspindel beim Anheben der Platte 13 an ihrer Hinterkante nach oben verschwenkt, wobei die Kegelräder 9 der vorne liegenden Antriebswellen 11 die Funktion eines Drehlagers ausüben und die Antriebsspindel an ihrem vorderen Ende durch einen Lagerbock 5 mit vertikalem Längsschlitz 5' in Position gehalten wird.

Bei der in der Zeichnung dargestellten konkreten Ausführungsform gleitet das Gleitelement 21 entlang der schiefen Ebene 23 nach oben oder unten und bewirkt bereits dadurch ein erstes Anheben oder Absenken der Platte 13. Gleichzeitig verschiebt sich das Gleitelement 21 gegenüber dem Gleitelement 22 im Sinne einer weiteren Höhenverstellung. Zu diesem Zweck kann die Führung 34, bzw. 35 einen hinteren Endanschlag für das Gleitelement 22 bezüglich der Platte 13 aufweisen, der in der Figur nicht eigens dargestellt worden ist. Auf diese Weise kann durch Verschieben eines einzigen Gleitelementes eine verstärkte, insbesondere eine doppelte Höhenverstellung erzielt werden. Zu diesem Zweck verfügt das Gleitelement 21 bei der Ausführungsform gemäß Fig. 2a bis 2e über einen eigenen Antrieb, der für die Verschiebung nach hinten eine gespannte Feder 27 und für die Verschiebung nach vorne eine an dem von der Antriebsspindel 4 vorwärts und rückwärts angetriebenen Gleitelement 18 angreifendes zweiteiliges Zugorgan 37 aufweist.

Folgender Bewegungsablauf ergibt sich für das hintere Höhenverstellorgan: Aus der in Fig. 2a dargestellten Schließstellung der Platte 13 heraus wird zunächst ausschließlich eine Höhenverstellung bewirkt. Durch das durch Drehen der Antriebsspindel bewirkte Verschieben des Gleitelementes 18 des vorderen Höhenverstellorganes wird die Feder 27 des hinteren Höhenverstellorganes unter gleichzeitiger Verschiebung des Gleitelementes 21 des hinteren Höhenverstellorganes zunehmend entlastet — wie auch die Feder 26 —, weil das Zugorgan 37 durch einen in ein Langloch greifenden Zapfen oder entsprechende Anschläge 38 und 39 längenbegrenzt ist; der Anschlag 38 und der Anschlag 39 haben demnach die gleiche Funktion wie die Anschläge 31 und 30 des vorderen Höhenverstellorganes. Der Verschiebeweg des Gleitelementes 21 nach hinten wird bezüglich der Gleitelemente 20 und 22 durch ähnliche Endanschläge 28 bzw. 29 begrenzt wie durch die Endanschläge 28 und 29 der Gleitelemente 18 und 19. Dadurch wird das Entspannen der Feder 27 auf ein vorbestimmtes Maß begrenzt. In dieser Position, in der die höchste Höhenverstellung des hinteren — und gleichzeitig auch des vorderen — Höhenverstellorganes erreicht ist, sind die Federn 26 und 27 immer noch ausreichend gespannt, um die Gleitelemente 18 und 19 bzw. 20, 21 und 22 in dieser Position auch dann zu halten, wenn die Platte 13 später aus der Öffnungsposition wieder nach vorne geschoben wird. Hierzu reicht es z. B. aus, die Feder 27 am Rahmen 3 des Fahrzeugdaches festzulegen. Die Feder 27 kann sich insbesondere horizontal erstrecken, während die Feder 26 sich bevorzugt zu der schiefen Ebene 24 im wesentlichen parallel erstreckt.

Die Endanschläge am Gleitelement 21 bezüglich der Gleitelemente 20 und 22 können auf den Anschlag 38 und den Anschlag 39 des Zugorganes 37 sowie die Anschläge 28 bis 31 des vorderen Höhenverstellorganes derart abgestimmt sein, daß das vordere und das hintere Höhenverstellorgan ihre maximale Höhenstellung gleichzeitig erreichen, so daß der Anschlag 39 von dem Anschlag 38 sich fortzuschieben beginnt, wenn das Gleitelement 18 beginnt, die Platte 13 nach hinten zu verschieben. Sobald bei umgekehrter Bewegungsrichtung des Betätigungsorganes 4 der sich nach vorne bewegende Anschlag 39 den Anschlag 38 erreicht, wird das Gleitelement 21 nachfolgend gegen den Zug der sich dabei spannenden Feder 27 nach vorne gezogen, so daß die Höhenverstellung des hinteren Höhenverstellorganes eingeleitet wird. Auch bei dem hinteren Höhenverstellorgan können auf diese Weise ausreichend große Schließkräfte realisiert werden, ohne daß dazu ein besonderes Bauteil oder ein besonderer Antrieb erforderlich sind.

Wenn die Antriebsspindel — wie oben erwähnt — an ihrem hinteren Ende mittels des Gleitelementes 22 synchron mit der Platte 13 am hinteren Ende angehoben und gesenkt wird, wird dadurch ein allmähliches Flacher- oder Steilerstellen der Platte 13 bei weiterem Verschieben nach hinten erreicht — und zwar in Abhängigkeit vom Neigungswinkel zwischen der Antriebsspindel und der Platte in Schließposition der Platte sowie von der etwaigen Veränderung dieses Neigungswinkels durch Betätigen des bzw. der Höhenverstellorgane/s während der Öffnungs- bzw. Schließbewegung der Platte. Das Gleitelement 18 des vorderen Höhenverstellorganes bewegt sich nämlich bei der bevorzugten Verwendung einer Antriebsspindel als Betätigungsorgan oder Verwendung eines ähnlich wirkenden Führungselementes auf dem Weg nach hinten exakt parallel zu dem Betätigungsorgan. Im Ausführungsbeispiel gemäß Fig. 2a bis e bedeutet dies ein allmähliches Bewegen der Vorderstütze 16 nach oben bei zunehmender Verschiebung der Platte 13 nach hinten, wobei die dabei erzielte Höhenverstellung durch die Neigung der schiefen Ebene 23 bestimmbar ist. Da bei der Längsverschiebung der Platte das plattenseitige Halteorgan 17 an der Hinterstütze 36 seine Höhenposition beibehält und die Platte bezüglich des Fahrzeugdaches weniger stark nach hinten ansteigt als die Antriebsspindel, neigt sich die hintere Plattenkante bei der Öffnungsbewegung also zunehmend nach unten. Hier wird also auf einfache Weise ein zunehmendes Flacherstellen der Platte 13 bei zunehmender Verschiebestellung nach hinten erreicht, obwohl die Platte 13 in der vordersten Schiebeposition — einer guten Fahrgastraumlüftung entsprechend — hinreichend schräg gestellt sein kann. Dadurch wird die Spoiler-Wirkung bei nach hinten geschobener Platte 13 vermindert. Dies kann deshalb von Nutzen sein, weil die Vorder- und die Hinterstütze bei nach hinten geschobener Platte einen kürzeren Abstand aufweisen und nur geringere, an der Platte 13 angreifende Hebelkräfte aufnehmen können.

Wenn umgekehrt die Platte bezüglich des Fahrzeugdaches stärker als die Antriebsspindel geneigt ist, bzw. die Platte und die Antriebsspindel nach hinten auseinanderlaufen, wird die Platte beim Nach-hinten-Verschieben zunehmend steiler angestellt. Die möglichen Bewegungen der einzelnen Bauteile ergeben sich aus Fig. 4.

In den Fig. 4 bis 9 ist eine besonders bevorzugte Ausführungsform der Erfindung dargestellt. Der Übersichtlichkeit halber sind die Fig. 4 bis 7 im Maßstab 1 : 1 dargestellt, wobei jeweils nur die für die Schiebedachfunktion entscheidenden Endbereiche der seitlichen Führungen (Rahmenstreben 6) dargestellt sind. In Abweichung der vorangehenden Ausführungsbeispiele handelt es sich bei der Ausführungsform gemäß Fig. 4 bis 9 um ein Fahrzeugschiebedach, das bei der Herstellung des Kraftfahrzeuges bereits in die Dachhaut eingebaut wird, so daß die seitlichen Rahmenstreben 6 des Schiebedachrahmens mit dem Fahrzeugdach 2 durch Punktschweißen oder dgl. verbunden sind und eine umlaufende Rinne bilden. Die Halterung und Führung des Schiebedaches erfolgt bei dieser Ausführungsform durch längliche Führungselemente 43, die mit den seitlichen Rahmenstreben 6 verschraubt, verklebt oder in ähnlicher Weise starr und dauerhaft verbunden sind und bevorzugt aus Kunststofformteilen bestehen. Dieses Führungselement 43 ist in Fig. 7 einzeln dargestellt, und zwar in einem vertikalen Schnitt in Längsrichtung (A) in seiner Mittelebene (siehe Linie VII — VII gemäß Fig. 4). Dieses Führungselement weist an seinem hinteren Ende schräg nach hinten und oben sich erstreckende, einander gegenüberliegende Nuten auf, die als das untere Gleitelement 20 dienen. Hinter diesen Nuten sind dazu parallel verlaufende Nuten 44 angeordnet, die im Bedarfsfalle zur Aufnahme von Federn (wie Feder 27 gemäß Fig. 2) dienen. Im mittleren Bereich zwischen dem vorderen und hinteren Ende des Führungselementes 43 sind einander gegenüberliegende schräge Ebenen 45 angeordnet, die als Auflage für weitere, im Querschnitt C-förmig profilierte Führungsschienen 40 dienen. Die Neigung der schrägen Ebene 45 und damit der Führungsschiene 40 ist mit der Neigung der als Betätigungsorgan dienenden Antriebsspindel bei maximaler Höhenstellung des hinteren Höhenverstellorganes identisch. Am vorderen Ende der Führungselemente 43 sind quer zur Fahrzeuglängsrichtung sich etwa horizontal erstreckende Bohrungen oder Vertiefungen 46 zur Aufnahme der Querachse 15 zum Verschwenken der Antriebsspindel 4 und der Platte 13 angeordnet.

Wie aus Fig. 4, 5 und 6 ersichtlich, wird die Antriebsspindel 4 über ein stirnseitiges Antriebsrad 47 mittels eines Antriebsriemens 48 im Drehsinne angetrieben. Als vordere Lagerböcke 5 für die Antriebsspindeln 4 dienen zwei Lagerhalbschalen 5A und 5B, die gemeinsam sich seitlich erstreckende Lagerzapfen 49 zur drehbaren Aufnahme in den Bohrungen 46 der Führungselemente 43 bilden.

Als Vorderstütze 16 der Platte 13 dient wiederum ein vorderes Höhenverstellorgan, bestehend aus einem unteren, von der Antriebsspindel 4 antreibbaren Gleitelement 18 und einem mit dem Gleitelement 18 entlang einer schiefen Ebene 24 zwangsgeführten oberen Gleitelement 19.

Das obere Gleitelement 19 trägt ein vorderes Halteorgan 17' der Platte 13 mittels einer Schwenkwelle 50.

Um zu gewährleisten, daß das obere Gleitelement 19 des vorderen Höhenverstellorganes 16 zu Beginn des Öffnungsbewegung der Platte 13 in seiner zunächst eingenommenen Längsposition bezüglich des Führungselementes 43 verbleibt, weist das obere Gleitelement 19 sich etwa vertikal erstreckende seitliche Stege 51 auf, die in entsprechende Nuten 52 der Führungselemente 43 eingreifen. Dadurch kann das obere Gleitelement 19 zunächst nur vertikal bewegt werden, bis das untere Ende der Stege 51 an das obere hintere Ende der Nuten 52 gelangt. Bei der umgekehrten Bewegungsrichtung der Platte 13 bilden die Stege 51 und Nuten 52 korrespondierende Anschläge 30 und 31, wie sie im Zusammenhang mit Fig. 2 beschrieben wurden.

Sobald das obere Gleitelement 19 des vorderen Höhenverstellorganes 16 bezüglich des unteren Gleitelementes 18 seine, in Fig. 4 und 6 dargestellte, maximale Höhenverstellung abgeschlossen hat, wird es mittels (in der Zeichnung nicht eigens dargestellter) innerer Anschläge beim weiteren Drehen der Antriebsspindel 4 (im Öffnungssinne) gemeinsam mit dem unteren Gleitelement 18 nach hinten verschoben. Sobald das obere Gleitelement 19 seine zunächst eingenommene Längsposition verläßt und nach hinten verschoben wird, greift ein federbelastetes Rastelement 53 des oberen Gleitelementes 19 in ein korrespondierendes Rastelement 54 des unteren Gleitelementes 18 ein. Durch diese Verrastung wird erreicht, daß beim Verschieben der Platte 13 nach vorne das untere Gleitelement 18 und das obere Gleitelement 19 ihre Relativposition zueinander beibehalten, bis das obere Gleitelement 19 seine vorderste Position erreicht hat. Die Weiterbewegung des unteren Gleitelementes 18 nach vorne wird dadurch möglich, daß das Führungselement 43 eine Aufgleitebene 55 zum Verschwenken des Rastelementes 53 aufweist.

Das untere Gleitelement 18 weist seitliche Führungsstege 56 auf, die mit den Führungsschienen 40 des Führungselementes 43 korrespondieren, und die in diese Führungsschienen 40 eingreifen, sobald die Schwenkbewegung der Antriebsspindel 4 abgeschlossen ist; dies ist in der Regel dann der Fall, wenn das vordere Höhenverstellorgan 16 seine maximale Höhenverstellung abgeschlossen hat. Zur Erleichterung des Einführens der Führungsstege 56 in die Führungsschiene 40 kann eine entsprechende Aufgleitebene 57 im Führungselement 43 vorgesehen sein (Fig. 7). Des weiteren weist das untere Gleitelement 18 in seinem vorderen Bereich an ihm seitlich angeordnete und es nach vorne überragende Verriegelungskeile 58 auf; diese untergreifen den Lagerbock 5 im Bereich von dessen Lagerhalbschale 5B, sobald die Platte 13 ihre Schließstellung erreicht hat, im Verriegelungssinne gegen ein Anheben der Plattenvorderkante. Eine zwischen den Verriegelungskeilen 58 und dem oberen Gleitelement 19 gebildete nutförmige Aussparung 59 kann im Bedarfsfalle der Aufnahme einer der Feder 26 (Fig. 2) entsprechenden Feder dienen.

Beim Absenken der in ihrer vordersten Schiebeposition sich befindenden Platte 13 sorgt ein im Zusammenhang mit Fig. 2 beschriebenes Zugorgan, z. B. eine Metallstange, dafür, daß das nachfolgend noch beschriebene hintere Höhenverstellorgan die Absenkbewegung durchführt. Zu diesem Zweck muß das vordere Ende 37' des im übrigen der Übersichtlichkeit halber nicht dargestellten Zugorganes 37 vom unteren Gleitelement 18 nach vorne geschoben werden, sobald das obere Gleitelement 19 seine vordere Position erreicht hat. Hierzu wird das vordere Ende 37' des Zugorganes an einem, rinförmigen Halter 60 befestigt, der sich am vorderen Stirnende des unteren Gleitelementes 18 abstützen kann. Der Halter 60 umgreift die Antriebsspindel 4 und kann in Führungsnuten 61 des Führungselementes 43 bei seiner Vor- und Zurückbewegung geführt werden. Diese Führungsnuten 61 können an ihren vorderen und hinteren Enden auch die Funktion eines die weitere Längsbewegung verhindernden Anschlages übernehmen.

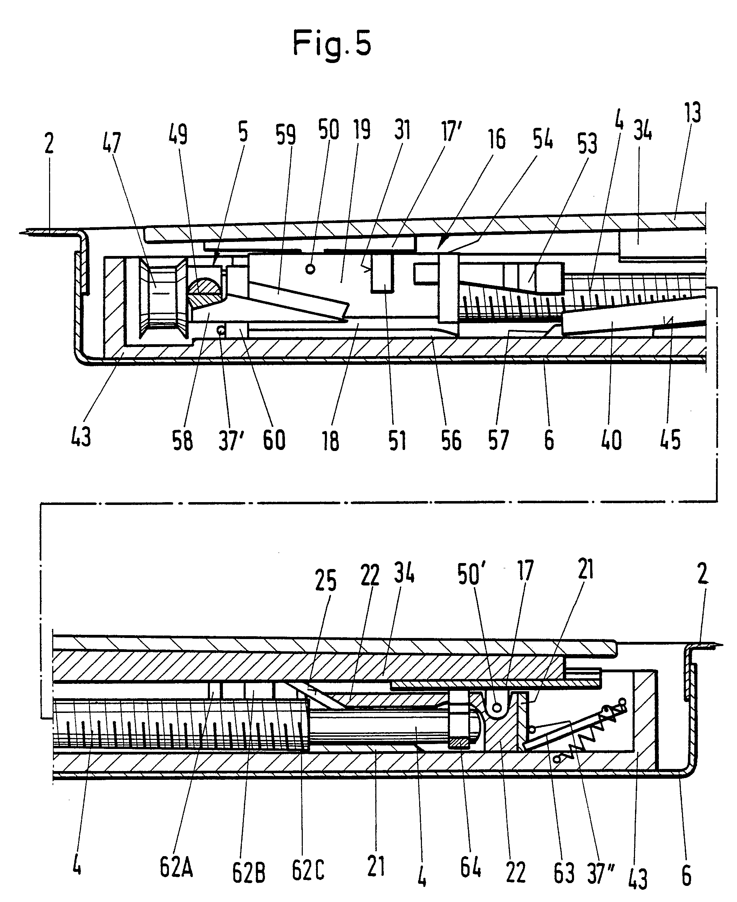

In Fig. 6 ist das hintere Höhenverstellorgan in seiner höchsten Position bei noch nicht nach hinten geschobener Platte 13 dargestellt. Darüber hinaus ist (im unteren Bildteil) die Platte 13 auch in ihrer extrem hintersten Verschiebeposition dargestellt. Das hintere Höhenverstellorgan besteht aus dem oben erwähnten unteren Gleitelement 20 im Führungselement 43, einem mittleren Gleitelement 21 sowie einem oberen Gleitelement 22. Die drei Gleitelemente sind (wie in Fig. 2) entlang schräger Ebenen 23 und 25 zwangsgeführt. Das mittlere Gleitelement 21 wird im Sinne einer Höhenverstellung vor- oder zurückgeschoben. Durch die entgegengesetzte Neigung der schiefen Ebenen 23 und 25 treibt das mittlere Gleitelement 21 das obere Gleitelement 22 wie ein Keil nach oben (oder zieht es nach unten), ohne das Gleitelement 22 in Längsrichtung zu bewegen. Das Verschieben des mittleren Gleitelementes 21 nach hinten erfolgt (im Gegensatz zu Fig. 2) dadurch, daß das mittlere Gleitelement 21 Rippen 62A bis 62C aufweist, die wie eine Gewindemutter in die letzten Gewindegänge der Antriebsspindel 4 seitlich eingreifen. Sobald die Rippe 62A das Gewindeende der Antriebsspindel 4 erreicht hat, kann die Antriebsspindel 4 frei weitergedreht werden, ohne daß sich das mittlere Gleitelement 21 weiter nach hinten verschiebt. In dieser Position des mittleren Gleitelementes 21 wird dieses von einem federbelasteten Hebel 63 in seiner hintersten Position gehalten. Die Bewegung des mittleren Gleitelementes 21 nach vorne — im Absenksinne — wird bevorzugt durch das bereits erwähnte Zugorgan eingeleitet, von dem in Fig. 5 und 6 der Übersichtlichkeit halber lediglich das hintere Ende 37'' dargestellt ist.

Die Antriebsspindel 4 ist an ihrem hinteren Ende im oberen Gleitelement 22 mittels einer Lagerschale 64 derart frei drehbar gelagert, daß die Antriebswelle 4 bezüglich des oberen Gleitelementes 22 die entsprechende, aber entgegengesetzte Schwenkbewegung durchführen kann, die sie an ihrem vorderen Ende durchführt.

Als hinteres Halteorgan 17 der Platte 13 dient eine kurze, um eine Schwenkwelle 50' bezüglich des oberen Gleitelementes 22 schwenkbare Führungsschiene, in der eine mit der Platte 13 fest verbundene Führung 34 gleitend verschiebbar ist. In Fig. 9a bis 9c ist eine alternative Ausführungsform für die Arretierung des mittleren Gleitelementes 21 des hinteren Höhenverstellorganes in seiner hintersten, d. h. der größten Höhenverstellung entsprechenden Position dargestellt. An dem mittleren Gleitelement 21 ist ein Hebel 63' schwenkbar befestigt. Das Zugorgan 37 greift mit seinem hinteren Ende 37'' an dem Hebel 63' derart an, daß beim Ziehen des Zugorganes 37 nach vorne eine zwischen dem mittleren Gleitelement 21 und dem Hebel 63' abgestützte Feder 65 komprimiert wird. Zu Beginn der Öffnungsbewegung wird — wie weiter oben erwähnt — das mittlere Gleitelement 21 nach hinten verschoben und dabei bezüglich des Führungselementes 43 angehoben. Spätestens beim Erreichen der hintersten Endposition des mittleren Gleitelementes 21 wird das Zugorgan 37 entlastet und das freie Ende des Hebels 63' kann einen ortsfesten Anschlag 43' hintergreifen. In dieser Position kann das mittlere Gleitelement 21 nicht mehr nach vorne verschoben werden und das hintere Höhenverstellorgan ist deshalb in seiner Höhenendposition arretiert. Erst wenn das Zugorgan 37 bei Erreichen der vorderen Schiebeposition der Platte durch weiteres Antreiben der Antriebsspindel 4 im Schließsinne zugbelastet wird, schwenkt der Hebel 63' gegen den Druck der Feder 65 nach vorne und gibt die Bewegung des mittleren Gleitelementes 21 nach vorne frei. Der Weg des Hebels 63' kann durch eine Stellschraube 63'' begrenzt werden. Die Stellschraube 63'' ermöglicht darüber hinaus eine Synchronisation der Bewegung des vorderen und hinteren Höhenverstellorganes.

Bei Fahrzeugschiebedächern, bei denen die Kraft für das Höhenverstellen der Platte im Bereich der seitlichen Plattenränder aufgebracht wird, kann es von Vorteil sein, eine im entlasteten Zustand weniger stark als die Dachhaut des Fahrzeuges quer zur Fahrtrichtung gebogene Platte zu verwenden. Eine derartige Platte wird bei der abschließenden vertikalen Schließbewegung an ihren Längsseiten von dem oder den Höhenverstellorgan/en nach unten gezogen, während sie im mittleren Bereich ihrer vorderen und hinteren Kante bereits auf einer Dichtung oder dgl. aufliegt. Ein derartiger elastischer Biegevorgang erfordert natürlich eine relativ starke Höhenverstellmöglichkeit an den Seitenrändern der Platte, also auch im Bereich ihrer Vorderstütze. Die vorderen Höhenverstellorgane sind zumindest für nachrüstbare Spoilerdächer unbedingt zu empfehlen, um die erforderliche Dichtigkeit bei geschlossener Platte zu erreichen ; aber auch dann, wenn ein Wegtauchen im mittleren Bereich der Vorderkante der Platte beim Anheben der Hinterkante der Platte unerwünscht ist, wie z. B. wenn ein Windabweiser an der Vorderkante des Fahrzeugschiebedaches angebracht werden soll, empfiehlt es sich, außer den hinteren auch vordere Höhenverstellorgane vorzusehen. Der Höhenverstellweg der erfindungsgemäß bevorzugten vorderen Höhenverstellorgane wird in der Regel relativ klein gehalten und beträgt z. B. etwa 4 mm. Daher kann es wünschenswert sein, die Platte im mittleren Bereich ihrer Vorderkante ebenfalls höhenverstellbar zu machen. Die Hauptaufgabe dieses weiteren Höhenverstellorganes besteht im Anheben des mittleren Bereiches der Plattenvorderkante am Anfang der Öffnungsbewegung bzw. beim Absenken am Ende der Schließbewegung der Platte. Besonders vorteilhaft ist dieses Höhenverstellorgan, wenn es die Plattenvorderkante in deren mittleren Bereich sowohl bei der Öffnugsals auch bei der Schließbewegung anhebt, während eines definierten Verschiebeweges der Platte angehoben hält und anschließend wieder absenkt.

Bei der ersten Ausführungsform der Erfindung (gemäß Anspruch 1) beruht der Grundgedanke auf der Schwenkbarkeit der Führungsschiene, durch die insbesondere ein besonders vorteilhafter Bewegungsablauf der Platte erzielt wird. Bei der zweiten Ausführungsform der Erfindung (gemäß Anspruch 2) beruht der Grundgedanke darauf, das hintere Höhenverstellorgan aus drei Gleitelementen herzustellen, durch die es unter anderem möglich wird, auch bei geringer Bauhöhe eine relativ große Höhenverstellung bei gleichzeitig präzisen Führungseigenschaften zu gewährleisten. Bei der dritten Ausführungsform der Erfindung (gemäß Anspruch 3) beruht der Grundgedanke darauf, ein aus mindestens zwei unter Relativbewegung zueinander höhenverstellbaren Elementen bestehendes Höhenverstellorgan an der Platte längsverschieblich gleitend zu führen und bezüglich des Fahrzeugdaches ortsfest anzuordnen und mindestens eines der beiden Gleitelemente des Höhenverstellorganes unabhängig von der Verschiebebewegung der Platte im Höhenverstellsinn und seiner Relativlage zu dem anderen Gleitelement des Höhenverstellorganes zu verstellen ; damit wird unter anderem einen Entkopplung der Höhenverstellung und der Verschiebung der Platte bei gleichzeitig präzisen Führungseigenschaften erzielt.

Bezugszeichenliste

1 Dachöffnung
2 Fahrzeugdach
3 Rahmen
4 Betätigungsorgan (Antriebsspindel)
5 Lagerbock
5A Lagerbockschale
5B Lagerbockschale
5' Längsschlitz
6 Rahmenstrebe
7 Rahmenstrebe

8 Kegelräder
9 Kegelräder
10 Lagerböcke
11 Antriebswellen
12 Kurbeltrieb
13 Platte
13A Vorderkante
14 Vorderkante
15 Querachse
16 Vorderstütze (vorderes Höhenverstellorgan)
17 Halteorgan (hinteres)
17' Halteorgan (vorderes)
18 Gleitelement (unteres)
19 Gleitelement (oberes)
20 Gleitelement (unteres)
21 Gleitelement (mittleres)
22 Gleitelement (oberes)
23 Schiefe Ebene (hinten)
24 Weitere schiefe Ebene (vorne)
25 Weitere schiefe Ebene (hinten oben)
26 Feder
27 Feder
28 Endanschlag
29 Endanschlag
30 Anschlag
31 Anschlag
34 Führung
35 Führung
36 Hinterstütze
37 Zugorgan
37' Vorderes Ende
37'' Hinteres Ende
38 Anschlag
39 Anschlag
40 Führungsschiene (weitere)
43 Führungselemente
43' Anschlag
44 Nut für Feder
45 Ebene (schräge)
46 Bohrung
47 Antriebsrad
48 Antriebsriemen
49 Lagerzapfen
50 Schwenkwelle
50' Schwenkwelle
51 Stege
52 Nuten
53 Rastelement
54 Rastelement
55 Aufgleitebene
56 Führungsstege
57 Aufgleitebene
58 Verriegelungskeile
59 Aussparung
60 Halter
61 Führungsnuten
62A Rippe
62B Rippe
62C Rippe
63 Hebel
63' Hebel
63'' Stellschraube
64 Lagerschale
65 Feder

**Patentansprüche**

1. Fahrzeugschiebedach, zumindest bestehend aus einer Platte (13) mit einer Vorderkante und einer Hinterkante, einer Öffnung (1) im Fahrzeugdach, einer Führungsschiene (4), einer Vorderstütze (16), einer Hinterstütze (36), einem hinteren Höhenverstellorgan (20-25) und einem Betätigungsorgan, wobei die Platte

— in ihrer vordersten Stellung die Öffnung (1) im Fahrzeugdach (2) verschließt,

— zumindest an ihrer Hinterkante mittels des hinteren Höhenverstellorganes höhenverstellbar ist,

— außerhalb der Dachöffnung (1) in verschiedene Stellungen auf einer Seite des Fahrzeugdaches (2) verschiebbar ist,

— nahe ihrer Vorderkante mittels der wenigstens einen Vorderstütze in Längsrichtung (A) des Fahrzeuges entlang der Führungsschiene vor- und zurückbewegbar ist,

— mittels der wenigstens einen dahinter angeordneten Hinterstütze (36) abgestützt ist, wobei die Hinterstütze das hintere Höhenverstellorgan aufweist und

— mittels des mindestens einen Betätigungsorganes verschiebbar und höhen verstellbar ist, dadurch gekennzeichnet, daß die Führungsschiene mittels des hinteren Höhenverstellorganes um eine waagerechte Querachse (15) schwenkbar ist und die Platte (13) bezüglich des hinteren Höhenverstellorganes in Fahrzeuglängsrichtung (A) gleitend geführt ist oder das hintere Höhenverstellorgan bezüglich oder Platte (13) ortsfest und bezüglich des Rahmens (3) in Fahrzeuglängsrichtung (A) verschiebbar ist.

2. Fahrzeugschiebedach, zumindest bestehend aus einer Platte (13) mit einer Vorderkante und einer Hinterkante, einer Öffnung (1) im Fahrzeugdach, einer Führungsschiene (4), einer Vorderstütze (16), einer Hinterstütze (36), einem hinteren Höhenverstellorgan (20-25) und einem Betätigungsorgan, wobei die Platte

— in ihrer vordersten Stellung die Öffnung (1) im Fahrzeugdach (2) verschließt,

— zumindest an ihrer Hinterkante mittels des hinteren Höhenverstellorganes höhenverstellbar ist,

— außerhalb der Dachöffnung (1) in verschiedene Stellungen auf einer Seite des Fahrzeugdaches (2) verschiebbar ist,

— nahe ihrer Vorderkante mittels der wenigstens einen Vorderstütze in Längsrichtung (A) des Fahrzeuges entlang der Führungsschiene vor- und zurückbewegbar ist,

— mittels der wenigstens einen dahinter angeordneten Hinterstütze (36) abgestützt ist, wobei die Hinterstütze das hintere Höhenverstellorgan aufweist und

— mittels des mindestens einen Betätigungsorganes verschiebbar und höhenverstellbar ist, dadurch gekennzeichnet, daß

a) das hintere Höhenverstellorgan aus drei Gleitelementen (20, 21 und 22) besteht, die längs paarweise gemeinsamer schiefer ebenen (23 und 25) zueinander gleitend geführt sind,

b) mindestens eines der Gleitelemente (20, 21 oder 22) zumindest des hinteren Höhenverstellorganes bei in Fahrzeuglängsrichtung (A) stillstehender Platte (13) eigenständig vor- und zurückschiebbar antreibbar ist und

c) daß Höhenverstellorgan bezüglich der Platte (13) in Fahrzeuglängsrichtung (A) gleitend geführt und bezüglich des Fahrzeugdaches (2) ortsfest angeordnet ist oder daß — umgekehrt — das Höhenverstellorgan bezüglich der Platte (13) ortsfest angeordnet und bezüglich des Fahrzugdaches (2) in Fahrzeuglängsrichtung (A) gleitend geführt ist.

3. Fahrzeugschiebedach, zumindest bestehend aus einer Platte (13) mit einer Vorderkante und einer Hinterkante, einer Öffnung (1) im Fahrzeugdach, einer Führungsschiene (4), einer Vorderstütze (16), einer Hinterstütze, einem hinteren Höhenverstellorgan und einem Betätigungsorgan, wobei die Platte

— in ihrer vordersten Stellung die Öffnung (1) im Fahrzeugdach (2) verschließt,

— zumindest an ihrer Hinterkante mittels des hinteren Höhenverstellorganes höhenverstellbar ist,

— außerhalb der Dachöffnung (1) in verschiedene Stellungen auf einer Seite des Fahrzeugdaches (2) verschiebbar ist,

— nahe ihrer Vorderkante mittels der wenigstens einen Vorderstütze in Längsrichtung (A) des Fahrzeuges entlang der Führungsschiene vor- und zurückbewegbar ist,

— mittels der wenigstens einen dahinter angeordneten Hinterstütze (36) abgestützt ist, wobei die Hinterstütze das hintere Höhenverstellorgan aufweist und

— mittels des mindestens einen Betätigungsorganes verschiebbar und höhen-verstellbar ist, dadurch gekennzeichnet, daß

a) das hintere Höhenverstellorgan aus mindestens zwei längs einer schiefen Ebene (23 bzw. 25) zueinander gleitend geführten Gleitelementen (20, 21 bzw. 22) besteht,

b) mindestens eines der Gleitelemente (20, 21 oder 22) zu mindest des hinteren Höhenvestellorganes bei in Fahrzeuglängsrichtung (A) stillstehender Platte (13) eigenständig vor- und zurückschiebbar antreibbar ist,

c) das Höhenverstellorgan bezüglich der Platte (13) in Fahrzeuglängsrichtung (A) gleitend geführt und bezüglich des Fahrzeugdaches (2) derart ortsfest angeordnet ist, daß die zwischen dem ortsfesten Gleitelement (20) und dem darüber angeordneten Gleitelement (21) gebildete schiefe Ebene (23) nach hinten ansteigt und

d) die Platte oberhalb des Fahrzeugdaches verschiebbar ist.

4. Fahrzeugschiedebach nach Anspruch 1, dadurch gekennzeichnet, daß das hintere Höhenverstellorgan zumindestens zwei längs einer schiefen Ebene (23 bzw. 25) zueinander gleitend geführten Gleitelementen (20, 21 bzw. 22) besteht.

5. Fahrzeugschiebedach nach Anspruch 3, dadurch gekennzeichnet, daß das hintere Höhenverstellorgan aus drei Gleitelementen, (20, 21 und 22) besteht, die längs paarweise gemeinsamer schiefer Ebenen (23 und 25) zueinander gleitend, insbesondere im Sinne einer verstärkten Höhenverstellung, geführt sind.

6. Fahrzeugschiebedach nach Anspruch 4, dadurch gekennzeichnet, daß das hintere Höhenverstellorgan aus drei Gleitelementen (20, 21 und 22) besteht, die längs paarweise gemeinsamer schiefer Ebenen (23 und 25) zueinander gleitend, insbesondere im Sinne einer verstärkten Höhenverstellung, geführt sind.

7. Fahrzeugschiebedach nach einem der vorangehenden Ansprüche, dadurch gekennzeichnet, daß die Führungschiene eine das Betätigungsorgan (4) der Platte (13) bildende Antriebsspindel, insbesondere mit außenliegendem Schneckengewinde, ist.

8. Fahrzeugschiebedach nach Anspruch 2 oder 4, dadurch gekennzeichnet, daß die zwischen einem ortsfesten unteren Gleitelement (20) und einem darüber angeordneten Gleitelement (21) gebildete schiefe Ebene (23) in Richtung der Höhenverstellung und der Verschiebung der Platte (13) geneigt ist.

9. Fahrzeugschiebedach nach Anspruch 7, dadurch gekennzeichnet, daß ein nicht angetriebenes Ende der Antriebsspindel in dem hinteren Höhenverstellorgan frei drehbar gelagert·ist.

10. Fahrzeugschiebedach nach einem der Ansprüche 1 bis 9, dadurch gekennzeichnet, daß an zumindest einem der Höhenverstellorgane eine im Sinne eines Höhenverstellens und gegebenenfalls Höhenhaltens wirkende Feder (26 bzw. 27) angeordnet ist.

11. Fahrzeugschiebe nach Anspruch 10, dadurch gekennzeichnet, daß das Entspannen der Feder (26 bzw. 27) begrenzende und das weitere Verschieben der Platte (13) gestattende korrespondierende Endanschläge (28 bzw. 29 vorgesehen sand.

12. Fahrzeugschiebedach nach Anspruch 10, gekennzeichnet durch zumindest einen das Spannen der Feder (26 bzw. 27) ermöglichenden Anschlag (30 und 31 bzw. 38 und 39), wobei dieser Anschlag an dem betreffenden Höhenverstellorgan angeordnet ist und beim Höhenverstellen wirksam wird.

13. Fahrzeugschiebedach nach einem der Ansprüche 1 bis 12, dadurch gekennzeichnet, daß die Höhenverstellorgane jeweils plattenseitig mittels einer quer zur Fahrzeugslängsrichtung (A) erstreckten Achse kippbar bezüglich der Platte angeordnet sind oder umgekehrt.

14. Fahrzeugschiebedach nach einem der Ansprüche 1 bis 13, dadurch gekennzeichnet, daß die Vorderstütze (16) als vorderes Höhenverstellorgan ausgebildet ist und gegebenenfalls aus mindestens zwei langs einer schiefen Ebene (24) zueinander gleitend geführten Gleitelementen (18 und 19) besteht.

15. Fahrzeugschiebedach nach Anspruch 14, dadurch gekennzeichnet, daß ein gegebenenfalls als unteres Gleitelement (18) ausgebildetes Höhenverstellelement des vorderen Höhenverstellorganes vor- und zurückschiebbar antreibbar ist.

16. Fahrzeugschiebedach nach Anspruch 15, dadurch gekennzeichnet, daß das Höhenverstellelement zu Beginn der Öffnungsbewegung der Platte (13) zunächst ausschließlich im Sinne eine Höhenverstellung der Platte (13) verstellbar ist und erst nach Erreichen der gewünschten Höhenstellung im Sinne eines Verschiebens der Platte (13) nach hinten schiebbar ist.

17. Fahrzeugschiebedach nach Anspruch 15 oder 16, dadurch gekennzeichnet, daß das Höhenverstellelement bei der Schließbewegung der Platte (13) derart verschiebbar ist, daß die Platte (13) zunächst ausschließlich in Fahrzeuglängsrichtung (A) nach vorne verschoben wird und erst nachfolgend in ihre in der Fahrzeugdachebene liegende Schließstellung höhen-verstellt wird.

18. Fahrzeugschiebedach nach einem der Ansprüche 1 bis 17, gekennzeichnet durch ein in zumindest eine Verschieberichtung wirkendes, an einem gegebenenfalls als Gleitelement (21) ausgebildeten Höhenverstellelement im Verschiebesinne angreifendes Zugorgan (37) oder Druckorgan.

19. Fahrzeugschiebedach nach Anspruch 18, dadurch gekennzeichnet, daß das Zugorgan (37) einen Anschlag (38) und einen an dem Anschlag (38) angreifenden, an einem gegebenenfalls als unteres Gleitelement (18) ausgebildeten Höhenverstellelement des vorderen Höhenverstellorganes angeordneten Anschlag (39) aufweist.

20. Fahrzeugschiebedach nach einem der Ansprüche 1 bis 19, dadurch gekennzeichnet, daß das mindestens eine Betätigungsorgan (4) über ein endseitiges Winkelgetriebe (Kegelräder 8 und 9) von einer Antriebswelle (11) betätigbar ist.

21. Fahrzeugschiebedach nach einem der Ansprüche 1 bis 20, dadurch gekennzeichnet, daß die Betätigungsorgane und/oder die Höhenverstellorgane aus aus Kunststoff hergestellten Bauteilen bestehen.

22. Fahrzeugschiebedach nach einem der Ansprüche 1 bis 21, dadurch gekennzeichnet, daß ein gegebenenfalls als eines der Gleitelemente (20, 21 oder 22) ausgebildetes Höhenverstellelement des hinteren Höhenverstellorganes bei in Fahrzeuglängsrichtung (A) stillstehender Platte (13) eigenständig vor- und zurückschiebbar antreibbar ist.

23. Fahrzeugschiebedach nach einem der Ansprüche 1 bis 22, dadurch gekennzeichnet, daß zumindest ein Höhenverstellorgan mindestens in seiner in Öffnungsstellung erreichten Höhenposition gegen Höhenverstellungen verriegelbar ist.

24. Fahrzeugschiebedach nach Anspruch 14, dadurch gekennzeichnet, daß ein nicht eigenständig getriebenes gegebenenfalls als Gleitelement (19) ausgebildetes Höhenverstellelement des vorderen Höhenverstellorganes ausschließlich in seiner in Öffnungsstellung erreichten Höhenposition vor- und zurückschiebbar ist.

25. Fahrzeugschiebedach nach einem der Ansprüche 1 bis 24, gekennzeichnet durch eine weitere, ortsfeste Führungsschiene (40) für die Vorderstütze (16), die bezüglich der Dachhaut derart geneigt ist, daß sie parallel zum Verschiebeweg der Vorderstütze (16) angeordnet ist.

## Claims

1. A sliding roof for vehicles, at least comprising a plate (13) with a front edge and a rear edge, an opening (1) in the vehicle roof, a guide rail (4), a front support (16), a rear support (36), a rear height adjustment device (20-25) and an actuating device, the plate

— closing the opening (1) in the vehicle roof (2) in its foremost position,

— being height adjustable at least at its rear edge by means of the rear height adjustment device,

— being displaceable outside the roof opening (1) into different positions on one side of the vehicle roof (2),

— being displaceable back and forth along the guide rail in the vicinity of its front edge by means of the front support, of which there is at least one, in the longitudinal direction (A) of the vehicle,

— being supported by the rear support (36), of which there is at least one arranged behind the plate, the rear support comprising the rear height adjustment device and

— being displaceable and height adjustable by means of the actuating device, of which there is at least one,

characterised in that the guide rail can be pivoted by means of the rear height adjustment device about a horizontal transverse axis (15) and the plate (13) is guided so as to slide relative to the rear height adjustment device in the longitudinal direction (A) of the vehicle or the rear height adjustment device is stationary relative to the plate (13) and is displaceable relative to the frame (3) in the longitudinal direction (A) of the vehicle.

2. A sliding roof for vehicles, at least comprising a plate (13) with a front edge and a rear edge, an opening (1) in the vehicle roof, a guide rail (4), a front support (16), a rear support (36), a rear height adjustment device (20-25) and an actuating device, the plate

— closing the opening (1) in the vehicle roof (2) in its foremost position,

— being height adjustable at least at its rear edge by means of the rear height adjustment device,

— being displaceable outside the roof opening (1) into different positions on one side of the vehicle roof (2),

— being displaceable back and forth along the guide rail in the vicinity of its front edge by means of the front support, of which there is at least one, in the longitudinal direction (A) of the vehicle,

— being supported by the rear support (36), of which there is at least one arranged behind the plate, the rear support comprising the rear height adjustment device and

— being displaceable and height adjustable by means of the actuating device, of which there is at least one,

characterised in that

a) the rear height adjustment device is formed by three slide elements (20, 21 and 22), which are guided so as to slide relative to one another along pairs of common inclined planes (23 and 25),

b) at least one of the slide elements (20, 21 or 22) of at least the rear height adjustment device can be driven independently so as to slide back and forth whilst the plate (13) is stationary in the longitudinal direction (A) of the vehicle and

c) the height adjustment device is guided so as to slide relative to the plate (13) in the longitudinal direction (A) of the vehicle and is arranged stationary relative to the vehicle roof (2) or — conversely — the height adjustment device is arranged stationary relative to the plate (13) and is guided so as to slide relative to the vehicle roof (2) in the longitudinal direction (A) of the vehicle.

3. A sliding roof for vehicles, at least comprising a plate (13) with a front edge and a rear edge, an opening (1) in the vehicle roof, a guide rail (4), a front support (16), a rear support (36), a rear height adjustment device (20-25) and an actuating device, the plate

— closing the opening (1) in the vehicle roof (2) in its foremost position,

— being height adjustable at least at its rear edge by means of the rear height adjustment device,

— being displaceable outside the roof opening (1) into different positions on one side of the vehicle roof (2),

— being displaceable back and forth along the guide rail in the vicinity of its front edge by means of the front support, of which there is at least one, in the longitudinal direction (A) of the vehicle,

— being supported by the rear support (36), of which there is at least one arranged behind the plate, the rear support comprising the rear height adjustment device and

— being displaceable and height adjustable by means of the actuating device, of which there is at least one,

characterised in that

a) the rear height adjustment device is formed by two slide elements (20, 21 or 22), which are guided so as to slide relative to one another along an inclined plane (23 or 25),

b) at least one of the slide elements (20, 21 or 22) of at least the rear height adjustment device can be driven independently so as to slide back and forth whilst the plate (13) is stationary in the longitudinal direction (A) of the vehicle,

c) the height adjustment device is guided so as to slide relative to the plate (13) in the longitudinal direction (A) of the vehicle and is arranged stationary relative to the vehicle roof (2) in such a manner that the inclined plane (23) formed between the stationary slide element (20) and the slide element (21) arranged above the latter rises towards the back and

d) the plate is displaceable above the vehicle roof.

4. A sliding roof for vehicles according to claim 1, characterised in that the rear height adjustment device is formed by at least two slide elements (20, 21 or 22) which are guided so as to slide relative to one another along an inclined plane (23 or 25).

5. A sliding roof for vehicles according to claim 3, characterised in that the rear height adjustment device is formed by three slide elements (20, 21 and 22), which are guided so as to slide relative to one another along pairs of common inclined planes (23 and 25), more particularly for the purpose of an increased height adjustment.

6. A sliding roof for vehicles according to claim 4, characterised in that the rear height adjustment device is formed by three slide elements (20, 21 and 22), which are guided so as to slide relative to one another along pairs of common inclined planes (23 and 25), more particularly for the purpose of an increased height adjustment.

7. A sliding roof for vehicles according to one of the preceding claims, characterised in that the guide rail is a driving spindle forming the actuating device (4) of the plate (13), more particular comprising an external screw thread.

8. A sliding roof for vehicles according to claim 2 or 4, characterised in that the inclined plane (23) formed between a stationary lower slide element (20) and a slide element (21) arranged above the latter is inclined in the direction of the height adjustment and the displacement of the plate (13).

9. A sliding roof for vehicles according to claim 7, characterised in that a non-driven end of the driving spindle is mounted in the rear height adjustment device so as to be freely rotatable.

10. A sliding roof for vehicles according to one of claims 1 to 9, characterised in that on at least one of the height adjustment devices a spring (26 or 27) is arranged which acts for the purpose of height adjustment and optionally height locking.

11. A sliding roof for vehicles according to claim 10, characterised in that corresponding end stops (28 or 29) are provided which limit the release of the spring (26 or 27) and allow for the further displacement of the plate (13).

12. A sliding roof for vehicles according to claim 10, characterised by at least one stop (30 and 31 or 38 and 39) allowing for the tensioning of the spring (26 or 27), the said stop being arranged on the respective height adjustment device and being effective during the height adjustment.

13. A sliding roof for vehicles according to one of claims 1 to 12, characterised in that in each case the height adjustment devices are arranged on the plate-side so as to be tiltable relative to the plate or vice versa by means of an axis extending transversely to the longitudinal direction (A) of the vehicle.

14. A sliding roof for vehicles according to one of claims 1 to 13, characterised in that the front support (16) is designed as a front height adjustment device and is optionally formed by at least two slide elements (18 and 19) which are guided so as to slide relative to one another along an inclined plane (24).

15. A sliding roof for vehicles according to claim 14, characterised in that a height adjustment element of the front height adjustment device optionally designed as a lower slide element (18) can be driven so as to slide back and forth.

16. A sliding roof for vehicles according to claim 15, characterised in that at the beginning of the opening movement of the plate (13), the height adjustement element can firstly only be adjusted for the purpose of height adjustment of the plate (13) and can only slide backwards for the purpose of displacement of the plate (13) after the desired vertical position has been obtained.

17. A sliding roof for vehicles according to claim 15 or 16, characterised in that the height adjustment element can be displaced upon the closing movement of the plate (13) in such a manner that the plate (13) is firstly displaced exclusively forwards in the longitudinal direction (A) of the vehicle and is only then height adjusted into its closed position lying in the plane of the vehicle roof.

18. A sliding roof for vehicles according to one of claims 1 to 17, characterised by a tensioning device (37) or pressure device acting in at least one displacement direction and acting in the direction of displacement upon a height adjustment element optionally designed as a slide element (21).

19. A sliding roof for vehicles according to claim 18, characterised in that the tensioning device (37) comprises a stop (38) and a stop (39) which acts upon the stop (38) and which is arranged on a height adjustment element of the front height adjustment device optionally designed as a lower slide element (18).

20. A sliding roof for vehicles according to one of claims 1 to 19, characterised in that at least one actuating device (4) is actuated by a drive shaft (11) via and end-side angle gearing (bevel gears 8 and 9).

21. A sliding roof for vehicles according to one of claims 1 to 20, characterised in that the actuating device and/or the height adjustment device are formed by structural parts made of plastics material.

22. A sliding roof for vehicles according to one of claims 1 to 21, characterised in that a height adjustment element of the rear height adjustment device optionally designed as one of the slide elements (20, 21 or 22) can be driven independently so as to slide back and forth whilst the plate (13) is stationary in the longitudinal direction (A) of the vehicle.

23. A sliding roof for vehicles according to one of claims 1 to 22, characterised in that at least one height adjustment device can be locked against height displacement at least in its vertical position reached in the open position.

24. A sliding roof for vehicles according to claim 14, characterised in that a non-independently driven height adjustment element of the front height adjustment device optionally designed as a slide element (19) can only slide back and forth in its vertical position reached in the open position.

25. A sliding roof for vehicles according to one of claims 1 to 24, characterised by a further stationary guide rail (40) for the front support (16), which rail is inclined relative to the roof skin in such a manner that it is arranged parallel to the displacement path of the front support (16).

**Revendications**

1. Toit coulissant pour véhicules automobiles, comportant au moins une plaque (13) avec un bord avant et un bord arrière, une ouverture (1) pratiquée dans le toit du véhicule, un rail de guidage (4), un appui avant (16), un appui arrière (36), un organe arrière de réglage de hauteur (20-25) et un organe de manœuvre, la plaque

— fermant dans sa position la plus avancée l'ouverture (1) du toit (2) du véhicule,

— étant réglable en hauteur au moins sur son bord arrière au moyen de l'organe arrière de réglage de hauteur,

— coulissant à l'extérieur de l'ouverture de toit (1), en différentes positions, sur un côté du toit (2) du véhicule,

— pouvant avancer et reculer le long du rail de guidage, près de son bord avant, au moyen d'au moins un appui avant, dans la direction longitudinale (A) du véhicule,

— prenant appui au moyen d'au moins un appui arrière (36) placé derrière elle, l'appui arrière présentant l'organe arrière de réglage en hauteur, et

— étant coulissant et réglable en hauteur au moyen d'un organe de manœuvre au moins,

— caractérisé en ce que le rail de guidage peut pivoter au moyen de l'organe arrière de réglage de hauteur autour d'un axe transversal (15) horizontal, et la plaque (13) étant guidée coulissante par rapport à l'organe arrière de réglage de hauteur, dans la direction longitudinale (A) du véhicule, ou l'organe arrière de réglage de hauteur est fixe par rapport à la plaque (13) et coulissant par rapport au châssis (3), dans la direction longitudinale (A) du véhicule.

2. Toit coulissant pour véhicules automobiles, comportant au moins une plaque (13) avec un bord avant et un bord arrière, une ouverture (1) pratiquée dans le toit du véhicule, un rail de guidage (4), un appui avant (16), un appui arrière (36), un organe arrière de réglage de hauteur (20-25) et un organe de manœuvre, la plaque

— fermant l'ouverture (1) du toit (2) du véhicule, dans sa position la plus avancée,

— étant réglable en hauteur au moins sur son bord arrière au moyen de l'organe arrière de réglage de hauteur,

— coulissant à l'extérieur de l'ouverture de toit (1) dans différentes positions, sur son côté du toit (2) du véhicule,

— pouvant avancer et reculer le long du rail de guidage, près de son bord avant, au moyen d'au moins un appui avant, dans la direction longitudinale (A) du véhicule,

— prenant appui au moyen d'au moins un appui arrière (36) placé derrière elle, l'appui arrière présentant l'organe arrière de réglage en hauteur, et

— étant coulissant et réglable en hauteur au moyen d'un organe de manœuvre au moins, caractérisé en ce que

a) l'organe arrière de réglage de hauteur est constitué de trois éléments coulissants (20, 21 et 22) qui sont guidés coulissants le long de plans obliques (23 et 25) communs deux par deux,

b) au moins l'un des éléments coulissants (20, 21 ou 22) d'au moins l'organe arrière de réglage de hauteur, peut être entraîné vers l'avant et vers l'arrière, indépendamment, dans la direction longitudinale (A) du véhicule, lorsque la plaque (13) est à l'arrêt, et

c) en ce que l'organe de réglage en hauteur est guidé coulissant par rapport à la plaque (13) dans la direction longitudinale du véhicule (A) et est disposé fixe par rapport au toit (2) du véhicule, ou en ce que — à l'inverse — l'organe de réglage de hauteur est fixe par rapport à la plaque (13) et guidé coulissant par rapport au toit (2) du véhicule dans la direction longitudinale (A) de celui-ci.

3. Toit coulissant pour véhicules automobiles, comportant au moins une plaque (13) avec un bord avant et un bord arrière, une ouverture (1) pratiquée dans le toit du véhicule, un rail de guidage (4), un appui avant (16), un appui arrière (36), un organe arrière de réglage de hauteur et un organe de manœuvre, la plaque

— fermant dans sa position la plus avancée l'ouverture (1) du toit (2) du véhicule,

— étant réglable en hauteur au moins sur son bord arrière au moyen de l'organe arrière de réglage de hauteur,

— coulissant à l'extérieur de l'ouverture de toit (1), en différentes positions, sur un côté du toit (2) du véhicule,

— pouvant avancer et reculer le long du rail de guidage, près de son bord avant, au moyen d'au moins un appui avant, dans la direction longitudinale (A) du véhicule,

— prenant appui au moyen d'au moins un appui arrière (36) placé derrière elle, l'appui arrière présentant l'organe arrière de réglage en hauteur, et

— étant coulissant et réglable en hauteur au moyen d'un organe de manœuvre au moins, caractérisé en ce que

a) l'organe arrière de réglage de hauteur est constitué d'au moins deux éléments coulissants (20, 21 ou 22) guidés coulissant l'un par rapport à l'autre le long d'un plan oblique (23 ou 25),

b) au moins l'un des éléments coulissants (20, 21 ou 22) d'au moins l'organe arrière de réglage de hauteur, peut être entraîné vers l'avant et vers l'arrière, indépendamment, dans la direction longitudinale (A) du véhicule, lorsque la plaque (13) est à l'arrêt,

c) l'organe de réglage de hauteur est guidé coulissant par rapport à la plaque (13) dans la direction longitudinale (A) du véhicule et est disposé fixe par rapport au toit (2) du véhicule de telle sorte que le plan oblique (23) formé entre l'élément coulissant (20) fixe et l'élément coulissant (21) placé au-dessus, s'élève vers l'arrière et

d) la plaque coulisse au-dessus du toit du véhicule.

4. Toit coulissant pour véhicules automobiles selon la revendication 1, caractérisé en ce que l'organe arrière de réglage de hauteur est constitué d'au moins deux éléments coulissants (20, 21 ou 22) guidés coulissant l'un par rapport à l'autre le long d'un plan oblique (23 ou 25).

5. Toit coulissant pour véhicules automobiles selon la revendication 3, caractérisé en ce que l'organe arrière de réglage de hauteur est constitué de trois éléments coulissants (20, 21 et 22) qui sont guidés coulissant l'un par rapport à l'autre, le long de plans obliques (23 et 25) communs deux par deux, en particulier dans le sens d'un réglage de hauteur renforcé.

6. Toit coulissant pour véhicules automobiles selon la revendication 4, caractérisé en ce que l'organe arrière de réglage de hauteur est constitué de trois éléments coulissants (20, 21 et 22) qui sont guidés coulissant l'un par rapport à l'autre le long de plans obliques (23 et 25) communs deux par deux, en particulier dans le sens d'un réglage de hauteur renforcé.

7. Toit coulissant pour véhicules automobiles selon l'une des revendications précédentes, caractérisé en ce que le rail de guidage est une broche d'entraînement, en particulier à filetage de vis sans fin extérieur, formant l'organe de manœuvre (4) de la plaque (13).

8. Toit coulissant pour véhicules automobiles selon la revendication 2 ou 4, caractérisé en ce que le plan oblique (23) formé entre un élément coulissant (20) inférieur fixe et un élément coulissant (21) placé au-dessus, est incliné en direction du réglage de hauteur et du coulissement de la plaque (13).

9. Toit coulissant pour véhicules automobiles selon la revendication 7, caractérisé en ce qu'une extrémité non entraînée de la broche d'entraînement est montée de manière à pouvoir tourner librement dans l'organe arrière de réglage de hauteur.

10. Toit coulissant pour véhicules automobiles selon l'une des revendications 1 à 9, caractérisé en ce qu'il est prévu sur au moins l'un des organes de réglage de hauteur, un ressort (26 ou 27) agissant dans le sens d'un réglage de la hauteur et le cas échéant d'un maintien de la hauteur.

11. Toit coulissant pour véhicules automobiles selon la revendication 10, caractérisé en ce qu'il est prévu des butées de fin de course correspondantes (28 ou 29) qui limitent la détente des ressorts (26 ou 27), et autorisent la suite du coulissement de la plaque (13).

12. Toit coulissant pour véhicules automobiles selon la revendication 10, caractérisé par au moins une butée (30 et 31 ou 38 et 39) autorisant la tension des ressorts (26 ou 27), cette butée étant placée sur l'organe de réglage de hauteur concerné, et agissant pendant le réglage de la hauteur.

13. Toit coulissant pour véhicules automobiles selon l'une des revendications 1 à 12, caractérisé en ce que les organes de réglage de hauteur sont placés de manière à pouvoir basculer du côté de la plaque, et par rapport à celle-ci, au moyen d'un axe s'étendant perpendiculairement à la direction longitudinale (A) du véhicule, ou inversement.

14. Toit coulissant pour véhicules automobiles selon l'une des revendications 1 à 13, caractérisé en ce que l'appui avant (16) est un organe de réglage de hauteur et est constitué le cas échéant d'au moins deux éléments coulissants (18 et 19), guidés coulissant l'un par rapport à l'autre le long d'un plan oblique (24).

15. Toit coulissant pour véhicules automobiles selon la revendication 14, caractérisé en ce qu'un élément de réglage de hauteur de l'organe avant de réglage de hauteur, réalisé le cas échéant sous forme d'élément coulissant (18) inférieur, peut être entraîné de manière à coulisser vers l'avant et vers l'arrière.

16. Toit coulissant pour véhicules automobiles selon la revendication 15, caractérisé en ce que l'élément de réglage de hauteur se déplace, au début du mouvement d'ouverture de la plaque (13), exclusivement dans le sens d'un réglage de hauteur de la plaque (13), et ne coulisse vers l'arrière, pour déplacer la plaque (13), que lorsque la hauteur souhaitée est atteinte.

17. Toit coulissant pour véhicules automobiles selon la revendication 15 ou 16, caractérisé en ce que l'élément de réglage de hauteur peut coulisser lors du mouvement de fermeture de la plaque (13), de telle sorte que la plaque (13) se déplace tout d'abord vers l'avant, exclusivement dans la direction longitudinale (A) du véhicule, et n'est réglée qu'après en hauteur, dans sa position de fermeture qui se situe dans le plan du toit du véhicule.

18. Toit coulissant pour véhicules automobiles selon l'une des revendications 1 à 17, caractérisé par un organe de traction (37) ou un organe de pression agissant dans au moins une direction de coulissement, dans le sens d'un coulissement, sur un élément de réglage de hauteur réalisé le cas échéant sous forme d'élément coulissant (21).

19. Toit coulissant pour véhicules automobiles selon la revendication 18, caractérisé en ce que l'organe de traction (37) comporte une butée (38) et une butée (39) agissant sur la butée (38), placée sur un élément de réglage de hauteur réalisé le cas échéant sous forme d'élément coulissant (18), de l'organe de réglage de hauteur avant.

20. Toit coulissant pour véhicules automobiles selon l'une des revendications 1 à 19, caractérisé en ce qu'au moins un organe de manœuvre (4) peut être actionné par un arbre d'entraînement (11), par l'intermédiaire d'un engrenage conique terminal (roues coniques 8 et 9).

21. Toit coulissant pour véhicules automobiles selon l'une des revendications 1 à 20, caractérisé en ce que les organes de manœuvre et/ou les organes de réglage de hauteur sont des éléments réalisés en matière plastique.

22. Toit coulissant pour véhicules automobiles selon l'une des revendications 1 à 21, caractérisé en ce qu'un élément de réglage de hauteur de l'organe arrière de réglage de hauteur, réalisé le cas échéant sous la forme de l'un des éléments coulissants (20, 21 ou 22), est entraîné coulissant vers l'avant et vers l'arrière, indépendamment, dans la direction longitudinale du véhicule (A), lorsque la plaque (13) est à l'arrêt.

23. Toit coulissant pour véhicules automobiles selon l'une des revendications 1 à 22, caractérisé en ce qu'au moins un organe de réglage de hauteur peut être verrouillé contre des déplacements en hauteur, à la hauteur atteinte dans sa position d'ouverture.

24. Toit coulissant pour véhicules automobiles selon la revendication 14, caractérisé en ce qu'un élément de réglage de hauteur de l'organe avant de réglage de hauteur, non entraîné de manière indépendante, réalisé le cas échéant sous forme d'élément coulissant (19), peut coulisser vers l'avant et vers l'arrière, uniquement à la hauteur atteinte dans sa position d'ouverture.

25. Toit coulissant pour véhicules automobiles selon l'une des revendications 1 à 24, caractérisé par un autre rail de guidage (40) fixe destiné à l'appui avant (16), et qui est incliné par rapport à l'enveloppe du toit de manière à être parallèle au parcours de coulissement de l'appui avant (16).

# Fig.1

Fig.2a

Fig.2b

3 14 15 9 8 5' 17' 19 16 37 13 4

A

4 13 36 34 35 25 22 29 17 3

5 18 28 24 26 30 31 29 39 38

37 28 21 27 23 20

30 31 37 38 39 37 4

34

37 4

EP 0 250 507 B1

Fig. 2c

Fig. 2d

38    37    37    39    37  28    29

Fig. 2e

28    29    28    29

EP 0 250 507 B1

**Fig. 3**

**Fig. 7**

EP 0 250 507 B1

Fig. 4

EP 0 250 507 B1

# Fig.5

Fig.6

Fig.8a

22   13

4   25   50'   17   34

Fig. 8b

17   22   17

VIIIc   VIIIc

50'

Fig. 8c

50'   17

4   64   22

# Fig.9a

IXb

23  21  65  63'

IXb

37  43'  37"  43  63"

# Fig.9b

23

IXc

21

25

IXc

# Fig.9c

62A  62B  62C  21  65

63"

43'

37  25  37"  43